# EUROPEAN PATENT APPLICATION

(11) **EP 1 487 196 A1**
(43) Date of publication of application: **15.12.2004**
(21) Application number: 03712715.6
(22) Date of filing: 17.03.2003
(51) Int. Cl.: H04N 5/225, H04M 1/00, H04M 1/02, H04N 5/238

(54) **MOBILE TELEPHONE DEVICE HAVING CAMERA AND ILLUMINATION DEVICE FOR CAMERA**

(30) Priority: 19.03.2002 JP 2002075793; 27.05.2002 JP 2002151828
(71) Applicant: MITSUBISHI DENKI KABUSHIKI KAISHA, Tokyo 100-8310 (JP)
(72) Inventor: Komori, Noriyuki, c/o Mitsubishi Denki K. K., Tokyo 100-8310 (JP); Nakatani, Hidehiko, c/o Mitsubishi Denki K. K., Tokyo 100-8310 (JP); Abe, Ichihiro, c/o Mitsubishi Denki K. K., Tokyo 100-8310 (JP); Nagatoshi, Yushi, c/o Mitsubishi Denki K. K., Tokyo 100-8310 (JP); Arimai, Fumiaki, c/o Mitsubishi Denki K. K., Tokyo 100-8310 (JP); Nakahata, Shinsuke, Tokyo 100-0004 (JP)
(74) Representative: Whitlock, Holly Elizabeth Ann
(86) International application number: PCT/JP2003/003142
(87) International publication number: WO 2003/079671

(57) **Abstract**

Alight which can emit light continuously can be added to a cellular phone (1) while demands for reduction in size, weight, and thickness are being satisfied; by providing a cellular phone equipped with a camera (13) for taking a moving picture of a subject, with a lighting device (12) for illuminating a subject by means of a light-emitting diode, a switching device (21) for turning on a lighting device (12), a light distribution lens for condensing light radiated from the lighting device (12) toward the subject, and a transparent cover for protecting the light distribution lens on the subject side, which is the front side, of the lighting device (12).

## Description

### BACKGROUND OF THE INVENTION

### 1. Field of the Invention

The present invention relates to cellular phones equipped with a built-in camera which takes a moving picture by means of a solid-state image sensing device, especially a cellular phone with a built-in camera having a lighting device to be used in low light such as at nighttime.

### 2. Description of the Related Art

Recently, cellular phones with a built-in still camera have been commercially available. The sizes of image pickup devices and lenses are limited, and the dimensions of the cellular phones should not be increased, so that it has been difficult to shoot a subject under low light conditions. Known solutions that have been taken to make it possible to shoot a subject in low light are to incorporate a strobe light used for an ordinary camera into a cellular phone with a built-in still camera and to connect an external strobe light to a cellular phone with a built-in still camera.

One conventional cellular phone with a built-in camera disclosed in Japanese Unexamined Patent Application Publication No. 2001-320622 has a built-in strobe light unit. In the disclosed cellular phone with a built-in camera, the image pickup device of the still camera and the strobe light unit utilizing a xenon lamp or the like are disposed side by side, above a liquid crystal display.

The strobe light unit disclosed in the patent document indicated above has a stroboscopic tube, a reflector disposed behind the stroboscopic tube, and a transparent cover disposed in front of the stroboscopic tube for the purpose of protection. Light emitted from the stroboscopic tube is collected forward by the reflector, passes the transparent cover, and strikes a subject. The transparent cover is a plate-like member formed by a material which permits passage of light, and the surface is flat or has a pattern formed for light distribution.

The stroboscopic tube and the reflector are mounted on a main board of the cellular phone with a built-in camera. An electromagnetic shielding frame is disposed to reduce electromagnetic noise caused by a large current which flows when the strobe light flashes. On the back of the main board, a large capacitor for charging the power to flash the strobe light is disposed.

The cellular phone with a built-in camera and a conventional strobe light unit allows a still picture of a subj ect to be shot in low light by flashing the strobe light, while the influence of electromagnetic noise at the firing of the strobe light is suppressed by means of the members described above.

The conventional cellular phone with a built-in camera described above, however, requires relatively large components for a cellular phone, such as the xenon lamp, reflector, and large capacitor for charging, contrary to the user' s demand for smaller, lighter, and thinner cellular phones.

Cameras incorporated in some cellular phones that are currently available on the market are video cameras that can take both a still picture and a moving picture. Video cameras require a lighting unit that emits light continuously, instead of a strobe light unit that produces rapid bursts of light, for shooting in low light such as at nighttime. However, no conventional cellular phones have a continuous lighting unit.

To add a strobe light unit to the conventional cellular phone with a built-in camera described above while satisfying the demand for thickness reduction, the xenon lamp and the reflector must be disposed in close vicinity to the transparent cover. Accordingly, it is easy to visually recognize the xenon lamp of the strobe light unit added to the conventional cellular phone with a built-in camera, which would not be desirable in regard to the appearance.

### SUMMARY OF THE INVENTION

The present invention has been provided to solve the problems described above, morespecificallytoprovideacellular phone with a built-in camera and a light that is capable of continuous light emission while meeting the demand for smaller, lighter, and thinner cellular phones.

In an aspect of the present invention, a cellular phone with a built-in camera is a cellular phone equipped with a camera that can take a moving picture of a subj ect, including a lighting device for lighting a subj ect by means of a light-emitting diode, a switching device for turning on the lighting device, a light distribution lens for condensing (collecting) light emitted from the lighting device onto the subject, and a transparent cover, disposed in the front, or on the subject side of the lighting device, for protecting the light distribution lens. A light utilizing a light-emitting diode is also provided. Accordingly, the size, weight, and profile (thickness) of the cellular phone can be reduced, and also, a subject can be continuously illuminated by the light while a moving picture is being taken by the camera. Because of the light distribution lens for condensing light emitted forward from the light-emitting diode onto the subject, light emitted from the light-emitting diode can be efficiently directed onto the subject.

The transparent cover is formed as an integral part of a protection cover of a component which produces a visual effect on the user of the cellular phone with a built-in camera or as an integral part of a protection cover of a display device for displaying an image of a subject or an image received from a telephone of the party at the other end of the communication line. This helps reduce the number of components, the size, weight, and profile of the cellular phone further. As a lighting device, a light-emitting diode is directly mounted on a printed circuit board. This helps reduce the size, weight, and profile of the cellular phone. A light amount detection device which can detect an insufficient amount of ambient light is provided in a stage preceding a switch, and when the light amount detection device detects and outputs that the light amount is low, switching takes place to turn on the light automatically. Accordingly, the user of the cellular phone with a built-in camera can send an image without worrying about the amount of ambient light. The camera is used as a light amount detection device, and the amount of light is detected by the level of reception signal of the camera. If the amount of light is insufficient, the light is automatically turned on. Therefore, the need for providing a separate light detection device is eliminated, so that the size, weight, and profile of the cellular phone can be reduced further.

In another aspect of the present invention, a cellular phone with a built-in camera has a light distribution lens with a support for which is mounted to a light-emitting diode. Accordingly, the size, weight, and profile of the cellular phone can be reduced further. Moreover, the positional relationship between the optical axis of the light distribution lens and the light emission point of the light-emitting diode can be determined in higher precision. Accordingly, design can be performed to improve light condensing (collection) efficiency by reducing the light distribution angle. This will reduce irregularities in illuminance of the subject resulting from variations in position, and the illuminance of the subject can be improved.

In another aspect of the present invention, a cellular phone with a built-in camera has a transparent cover in which a convex lens portion having the function of a light distribution lens is formed. This enables the size, weight, and profile to be reduced further.

In another aspect of the present invention, a cellular phone with a built-in camera has both a transparent cover including a convex lens and a light distribution lens equipped with a support. As a result, it is possible to reduce the size, weight, and profile of the cellular phone, and also it is possible to absorb variations in light distribution among individual light-emitting diodes, positional variations in production, and other differences.

In another aspect of the present invention, a cellular phone with a built-in camera has a lighting device including a film-like member in the front, or on the subject side of the light-emitting diode. The front-to-back optical transmittance of the film-like member is lower than the back-to-front optical transmittance. This makes it harder to visually recognize the light-emitting diode and the circuit board, which is favorable in regard to the appearance.

In another aspect of the present invention, a cellular phone with a built-in camera has a lighting device in which an optical diffusion portion for diffusing light is provided at or on at least one orthogonal side (or surface) of a component, among components which have a side (surface) orthogonal to light (the optical axis of light) emitted from the light-emitting diode and allow light emitted from the light-emitting diode to pass through, and the optical diffusion portion is formed at or on one or more surfaces or sides of a component included in the lighting device. This makes it hard to visually recognize the light-emitting diode and the circuit board, which is favorable in regard to the appearance. In addition, either improvement can be made selectively: improving optical transmittance by reducing the amount of attenuation of light emitted from the light-emitting diode or reducing variations in distribution of illumination at the subject. In the lighting device, an optical diffusion plate having an optical diffusion layer on the side of the subject is provided in front of the light-emitting diode, so that light reflectivity becomes greater at the front surface of the optical diffusion plate than at the rear surface of the optical diffusion plate. Moreover, light transmitted from the inside to the outside is diffused again by the optical diffusion plate. Inaddition, thediffusionlayeroftheopticaldiffusion plate has a rough (bumpy) surface (surface with concaves and convenes). This reduces the amount of attenuation of illuminating light emitted from the light-emitting diode and improves optical transmittance, making it hard to visually recognize the light-emitting diode and circuit board, which is favorable in regard to the appearance.

In another aspect of the present invention, a cellular phone with a built-in camera has an optical diffusion plate formed in such a manner that the angle of light diffusion becomes smaller in the peripheral region than around the optical axis of a light-emitting diode. As a result, in addition to the merit that the amount of attenuation of illuminating light emitted from the light-emitting diode to be reduced and optical transmittance to be improved, variations in distribution of illumination at the subject decrease, and it is hard to visually recognize the light-emitting diode and the circuit board, which is favorable in regard to the appearance, there is another merit that the amount of light diffusion around the optical diffusion plate is reduced, reducing the amount of light diffusion outside the view angle and increasing the amount of light within the view angle, so that the subject can be brightly lighted.

In another aspect of the present invention, a cellular phone with a built-in camera uses a lighting device is provided as an external light. The external light is a detachable separate unit which has a plug which enables electrical and mechanical connection to the cellular phone with a built-in camera. The main unit of the cellular phone with a built-in camera has a jack to which the plug is detachably connected. As a result, in addition to the merits that it is possible to light the subj ect continuously while a moving picture is being taken by the camera, and both a still picture and a moving picture of a subject can be taken by the camera in low light, there is another merit that the size, weight, and profile of the cellular phone can be reduced further. A separate lighting unit for use with a camera has the same configuration as the lighting device in the cellular phone with a built-in camera described above, and also has a plug which can be electrically and mechanically connected to the jack of the lighting device in the cellular phone with a built-in camera. Because the lighting unit (external light) is provided as a separate unit detachable from the cellular phone with a built-in camera and need not be included in the camera, the size, weight, andprofile of the camera can be reduced further. This facilitates maintenance and replacement of the lighting unit.

In another aspect of the present invention, a cellular phone with a built-in camera has a lighting device in which an optical diffusion plate having an optical diffusion layer on the side of the light-emitting diode is disposed in front of the light-emitting diode. As a result, variations in distribution of illumination at the subject is reduced, making it hard to visually recognize the light-emitting diode and circuit board, which is favorable in regard to the appearance. The optical diffusion plate of the lighting device has an optical diffusion layer both on the light-emitting diode side and on the subject side of the optical diffusion plate (forward side of the light-emitting diode). Accordingly, in addition to the merit that variations in distribution of illumination at the subject can be reduced, there is another merit that the diffusion layers diffuse both entering and reflecting extraneous light, so that while the light-emitting diode is not lighted, it is hard to visually recognize the light-emitting diode, the circuit board, and other internal components from the outside, which is favorable in regard to the appearance.

In another aspect of the present invention, a cellular phone with a built-in camera has a lighting unit in which a reflection portion having a highly-reflective smooth surface is provided at least around a light-emitting diode, on a surface of the printed circuit board where the light-emitting diode is disposed. Accordingly, the amount of attenuation of illuminating light emitted from the light-emitting diode can be reduced. Light reflected from the surface of the light distribution lens, transparent cover, or the like toward the light-emitting diode side can be reflected back to the side of the subject. This causes optical transmittance of the light distribution lens, transparent cover, and the like to be improved. Therefore, the amount of light emitted toward the subject can be increased, and illuminance at the subject can be improved. The reflection portion is formed on the printed circuit board by printing or by fixing a film-like member having a highly reflective surface on the printed circuit board, and the surface of the subject side of the reflection portion has concaves and convexes (forming relief) for diffusing light. Accordingly, variations in distribution of illumination at the subject are reduced, the visual recognition of the light-emitting diode and the circuit board can be made harder, the light distribution characteristics of the lighting unit are improved in respect to the appearance. Because the optical diffusion plate can be made thin or becomes unnecessary, the size, weight, and profile of the cellular phone can be reduced further.

In another aspect of the present invention, a cellular phone with a built-in camera has a lighting unit in which a highly reflective structure is provided as a reflection portion at least around a light-emitting diode, on a surface of the printed circuit board where the light-emitting diode is provided. The reflection portion is shaped to enclose or cover at least a part of the side wall of the light-emitting diode, and a structure having a highly reflective surface on the side of the subject is formed and fixed on the printed circuit board. The structure of the reflection portion is formed with a resin of a highly reflective color, which is white, yellow, silver, or gold, or at least has the surface of the subject side coated in white, yellow, silver or gold, which is a highly reflectivity color, or at least has the surface of the subject side covered by a metal film formed by coating or vapor deposition. Accordingly, the amount of attenuation of illuminating light emitted from the light-emitting diode can be suppressed greater than when a reflection portion only is provided. Light reflected from the surface of a light distribution lens, transparent cover, and the like toward the light-emitting diode side can be reflected back to the subject side in a shorter optical path than when a reflection portion is provided on the printed circuit board. Accordingly, optical transmittance of the light distribution lens, transparent cover, and the like can be improved. Therefore, the amount of light directed to the subj ect increases, improving the illuminance of the subject still further.

### BRIEF DESCRIPTION OF THE DRAWINGS

In the attached drawings:
Fig. 1 shows an external view and shape of a cellular phone with a built-in camera according to a first embodiment of the present invention.
Fig. 2 is a cross-sectional view showing the structure of the light shown in Fig. 1.
Fig. 3 is a cross-sectional view showing the structure of a light according to a second embodiment of the present invention.
Fig. 4 is a cross-sectional view showing the structure of a light according to a third embodiment of the present invention.
Fig. 5 is a cross-sectional view showing the structure of a light according to a fifth embodiment of the present invention.
Fig. 6 is a cross-sectional view showing the structure of a light according to a sixth embodiment of the present invention.
Fig. 7 shows how light is emitted from a light-emitting diode when the light-emitting diode shown in Fig. 6 is turned on.
Fig. 8 is a cross-sectional view showing the structure of a light according to a seventh embodiment of the present invention.
Fig. 9 shows an external view and shape of a cellular phone with a built-in camera according to an eighth embodiment of the present invention.
Fig. 10 is a cross-sectional view showing the structure of a light according to a ninth embodiment of the present invention.
Fig. 11 is a cross-sectional view showing the structure of the light according to the ninth embodiment of the present invention.
Fig. 12 shows the relationship between image height (%: Horizontal axis) and illuminance ratio (%: Vertical axis) with the sixth embodiment, where the diffusion layer of the optical diffusion plate is provided on the side of the subject, and with the ninth embodiment, where the diffusion layer of the optical diffusion plate is provided on the side of the light source.
Fig. 13 illustrates the image height in the ninth embodiment.
Fig. 14 is a cross-sectional view showing the structure of a light according to a tenth embodiment of the present invention.
Fig. 15 is a cross-sectional view showing the structure of the light according to the tenth embodiment of the present invention.
Fig. 16 is a cross-sectional view showing the structure of a light according to an eleventh embodiment of the present invention.
Fig. 17 is a perspective view showing an example of a general shape of the structure shown in Fig. 16.
Fig. 18 is a cross-sectional view showing the structure of a diffusion plate according to a twelfth embodiment of the present invention.
Fig. 19 is a cross-sectional view showing the structure of the diffusion plate according to the twelfth embodiment of the present invention.
Fig. 20 is a cross-sectional view showing the structure of the diffusion plate according to the twelfth embodiment of the present invention.
Fig. 21 is a cross-sectional view showing the structure of the diffusion plate according to the twelfth embodiment of the present invention.
Fig. 22 is a cross-sectional view showing the structure of a light according to a thirteenth embodiment of the present invention.
Fig. 23 is a cross-sectional view showing the structure of a diffusion plate according to the thirteenth embodiment of the present invention.
Fig. 24 is a cross-sectional view showing the structure of a light according to a fourteenth embodiment of the present invention.
Fig. 25 is a cross-sectional view showing the structure of a diffusion plate according to the fourteenth embodiment of the present invention.
Fig. 26 is a cross-sectional view showing the structure of the diffusion plate according to the fourteenth embodiment of the present invention.

### DETAILED DESCRIPTION OF THE INVENTION

Embodiments illustrating the present invention will next be described.

### First Embodiment

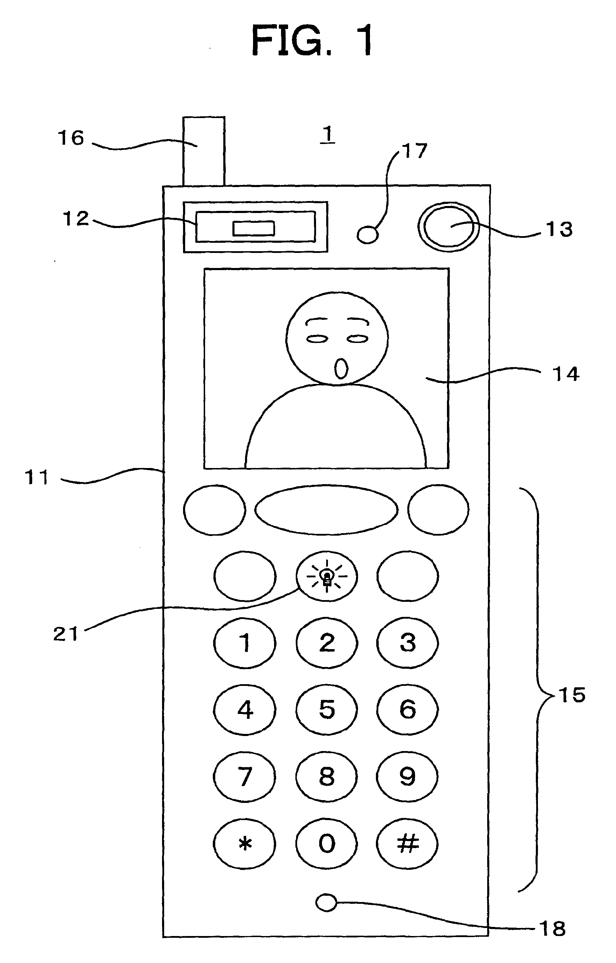

Fig. 1 shows an external view and shape of a cellular phone with a built-in camera according to a first embodiment of the present invention.

In the figure, the reference character 1 designates the whole of the cellular phone with a built-in camera (which may hereinafter be referred to as "camera-equipped cellular phone") of the first embodiment; the reference character 11 designates a housing of the cellular phone; the reference character 12 designates a light (video light) for lighting a subject continuously by means of a light-emitting diode (LED) which emits light at a high intensity. The reference character 13 designates a camera which includes an image pickup device such as a CCD and an optical lens and can take both a still picture and a moving picture. The reference character 14 designates a rectangular display (display device) using a liquid crystal or the like, provided to display information about an operation, text information, or an image taken by the camera. The reference character 15 designates a group of input keys (buttons) pressed to specify or select a telephone number, text, or image data, including a light switch (switching device) for turning on the lighting device 12. The reference character 16 designates an antenna for sending and receiving audio data and image data by radio; the reference character 17 designates an audio output opening for a speaker or the like of the cellular phone; the reference character 18 designates an audio input opening for a microphone or the like. The reference character 21 designates a switch for turning on or off the light 12 provided as a lighting device.

The housing 11 of the cellular phone generally has either an approximately rectilinear box shape, or a clamshell that is opened during use and closed (folded) in the standby state. Fig. 1 shows a box-shaped housing. In the case of the box-shaped housing, the display 14 is disposed above the center of the front face. In the case of the clamshell (bi-fold) housing, the display 14 is disposed on one surface to be folded inside and the input keys 15 are disposed on the other surface to be folded inside.

The camera 13 and the light 12 are disposed side by side, close to each other, above the display 14. In the first embodiment, the camera 13 and the light 12 are disposed close to each other in order to prevent an unnatural shadow from being cast over the subject when light is emitted.

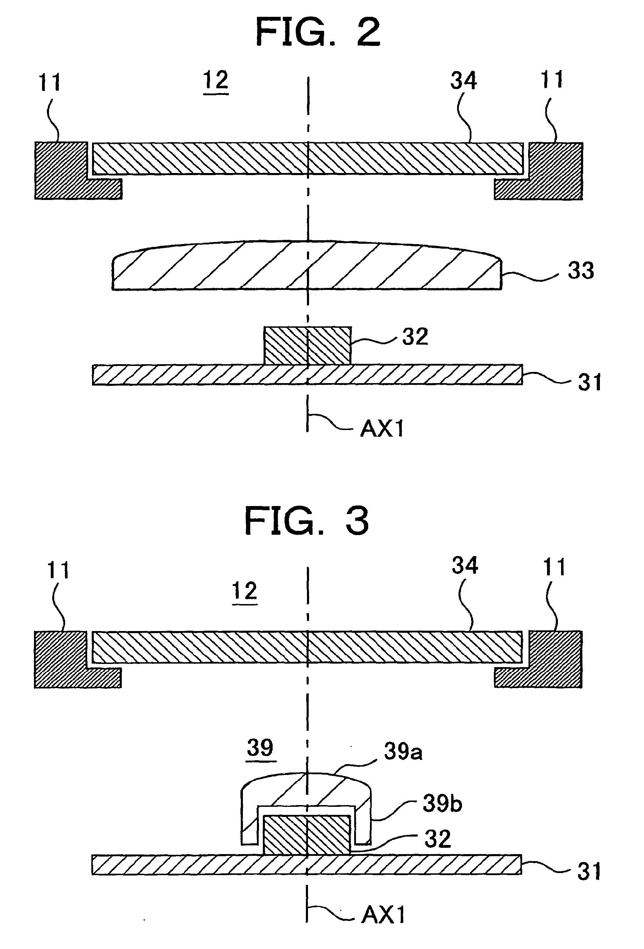

Fig. 2 is a cross-sectional view showing the structure of the light 12 shown in Fig. 1.

In the figure, the reference character 11 designates the housing of the cellular phone 1, and the reference character 12 designates the light, as described earlier. The reference character 31 designates a circuit board for electronic circuits and is generally a main circuit board of the cellular phone. The reference character 32 designates a light-emitting diode (lighting device) which emits light at a high intensity to illuminate a subject, and the color of light is white. In the first embodiment, the light-emitting diode 32 which emits white light is directly disposed on the circuit board 31 in such a manner that the optical axis AX1 of the light-emitting diode 32 becomes perpendicular to the circuit board 31.

The reference character 33 designates a light distribution lens which is shaped like a convex lens in order to condense light (increase the amount of light traveling straight by decreasing the radiation angle) radiated from the light-emitting diode 32 with a diverging angle of about 60 degrees, toward a subject. The light distribution lens 33 is disposed in front of, or on the subject side of the light-emitting diode 32, with the center aligned with the optical axis AX1 of the light-emitting diode 32, so that light radiated from the light-emitting diode 32 with some divergence is condensed within the view angle of the camera. A Fresnel lens, a cylindrical lens, or a lens of any arbitrary shape can be used as the light distribution lens 33.

The reference character 34 designates a transparent cover provided in an opening of the housing 11, in order to protect the light distribution lens 33, the light-emitting diode 32, and other internal components. The transparent cover 34 is disposed outside the light distribution lens 33 in such a manner that all light emitted from the light-emitting diode 32 toward the subj ect is allowed to pass therethrough to the outside. The transparent cover 34 is securely fit into or bonded to the opening of the housing 11. The transparent cover 34 may also be formed as an integral part of a protection cover of a component producing a visual effect on the user of the camera-equipped cellular phone, such as an incoming call indication light, a clock, or an ornamental component, or a protection cover of a display device such as a liquid crystal display window for displaying an image of a subject or an image received from the telephone of the party on the other end of the communication line. The reference character AX1 designates the optical axis of white light emitted from the light-emitting diode 32.

In comparison with the conventional xenon lamp used for still pictures, the light-emitting diode 32 is compact and lightweight, so that the size, weight, andprofile of the cellular phone can be reduced. If a plastic lens or the like is used as the light distribution lens 33, the size, weight, and profile can also be reduced, in comparison with the reflector which condenses light emitted from the conventional xenon lamp. The conventional xenon lamp requires a reflector because light is emitted from all around the lamp. The light-emitting diode 32, however, requires just the light distribution lens 33 disposed with the center aligned with the optical axis AX1 of the light-emitting diode 32 because light is emitted with a radiation angle of about 60 degrees.

Unlike a xenon lamp, the light-emitting diode 32 does not require a large capacitor for charging. The light-emitting diode 32 also differs from the xenon lamp in that heating due to discharge of a large current does not occur. Because of the low heating value, the light distribution lens 33 can be placed near the light-emitting diode 32, and no problem will occur even if the light-emitting diode 32 comes in contact with the light distribution lens. Therefore, the camera-equipped cellular phone of the first embodiment can be reduced further in size, weight, and profile.

The light 12 of the first embodiment, utilizing the light-emitting diode 32, can illuminate a subject up to about 50 cm away, and the amount of light is smaller than that of the xenon lamp, which can illuminate a range of about 1 m to 2 m. However, the light 12 can produce sufficient illumination for taking a picture of the user alone or a side-by-side row of two or three persons including the user and the xenon lamp cannot emit light continuously.

The user of the camera-equipped cellular phone 1 equipped with the light 12 as shown in Fig. 1 can take a picture of himself or herself and send the image to the party on the other end of the line by using the input keys 15 to actuate the camera 13. If the user is shot in so low light that the image to be sent can be dimmed, the user can turn on the switch 21 of the light 12 to illuminate the face of the user with light emitted from the light 12. Accordingly, a bright image can be sent.

The light 12 is disposed at the side (lateral vicinity) of the camera 13 above the display 14 in the first embodiment, but the light 12 may be disposed in any other position near the camera 13, such as in the vertical vicinity or diagonal vicinity of the camera 13. The light 12, the camera 13, and a display device such as a liquid crystal display window can be disposed in any positional relationship. The light 12 and the camera 13 are disposed on the same side on which the display 14 is disposed in the first embodiment and may also be disposed on the other side of the display 14, for instance.

Because, in the camera-equipped cellular phone of the first embodiment, the light 12 utilizing the light-emitting diode 32 is disposed directly on the circuit board 31 in such a manner that the optical axis AX1 becomes perpendicular to the circuit board 31, the size, weight, and profile of the cellular phone can be reduced. In addition, while a moving picture is being taken by the camera 13, the subject can be continuously illuminated by the light 12. Accordingly, the camera-equipped cellular phone of the first embodiment allows both a still picture and a moving picture of a subj ect to be taken by the camera 13 in low light.

Because the camera-equipped cellular phone of the first embodiment has the light distribution lens 33 for condensing light radiated forward from the light-emitting diode 32 toward the subject, illumination from the light-emitting diode 32 can be efficiently directed to the subject.

The light 12 can be automatically turned on by providing a light amount detection device for detecting the amount of ambient light, such as an optical sensor, in a stage preceding the switch 21 and by turning on the switch 21 when the light amount detection device detects and outputs that the amount of light is insufficient. The camera 13 may be used as the light amount detection device, in order to detect the amount of light on the basis of the level of the reception signal of the picture of the subject taken by the camera 13, so that the light 12 is automatically turned on if the amount of light is insufficient. This configuration allows the user of the camera-equipped cellular phone 1 of the present embodiment to send an image without worrying about the amount of ambient light and eliminates the need for providing a separate light detection device. Because the light detection device is unnecessary, the size, weight, and profile of the cellular phone can be reduced further.

If the transparent cover 34 is formed as an integral part of a protection cover of a component which produces a visual effect on the user of the camera-equipped cellular phone 1 or as an integral part of a protection cover of a display device for displaying an image of a subject or an image received from the telephone of the party on the other end of the communication line, some components are shared. Because the number of components can be reduced, the size, weight, profile, and cost can be reduced further.

### Second Embodiment

In the first embodiment described above, the light distribution lens 33 is disposedbetween the light-emitting diode 32 and the transparent cover 34. A separate member, which is not shown in the figure, is required to fix the light distribution lens 33 in a prescribed position.

In a second embodiment described below, the need for the separate member is eliminated by fixing the light distribution lens to the light-emitting diode 32.

Fig. 3 is a cross-sectional view showing the structure of the light 12 according to the second embodiment of the present invention. The general structure of the camera-equipped cellular phone 1 of the second embodiment is as described with reference to Fig. 1, as it is in the first embodiment.

The second embodiment differs from the first embodiment in that the light distribution lens 39 of the second embodiment has a support (supporting device) 39b in the lower part (on the side of the light-emitting diode 32) of the lens portion 39a. The support is mounted to the light-emitting diode 32 and supports the light distribution lens 39. The other components are the same as those in the first embodiment.

Because of the support 39b for mounting the light distribution lens 39 on the light-emitting diode 32, the cellular phone of the second embodiment can be reduced in size, weight, and profile further than that of the first embodiment. In addition, the positional relationship between the optical axis of the light distribution lens 39 and the light emission point of the light-emitting diode 32 can be determined in higher precision, so that design can be performed to reduce the light distribution angle and improve the light condensing efficiency. As a result, irregularities in illuminance of a subject due to positional variations can be reduced, and illuminance of the subject can be improved.

### Third Embodiment

In the first and second embodiments described above, either the light distribution lens 33 or the light distribution lens 39 is disposed between the light-emitting diode 32 and the transparent cover 34. It is required that the cellular phone accommodate the size (space), weight, and profile (thickness) of the light distribution lens 33 or 39 and the size (space), weight, and profile (thickness) of the transparent cover 34.

In a third embodiment described below, the transparent cover is formed to have a convex lens portion which has a light condensing function of a light distribution lens, eliminating the need for providing a light distribution lens.

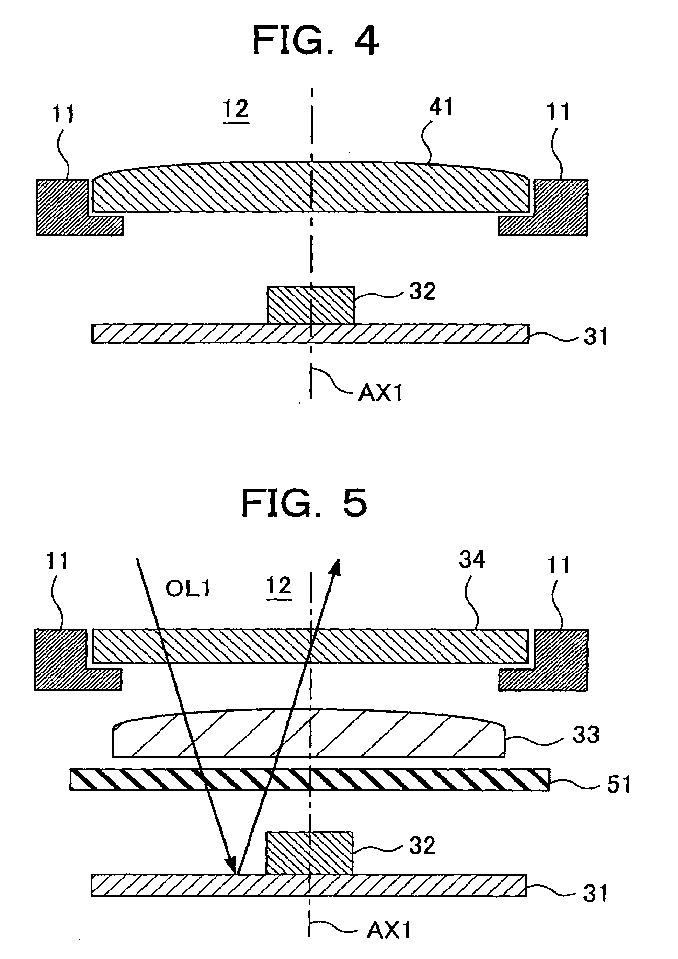

Fig. 4 is a cross-sectional view showing the structure of the light 12 according to the third embodiment of the present invention. The general configuration of the camera-equipped cellular phone 1 of the third embodiment is as described with reference to Fig. 1, as it is in the first and second embodiments.

The third embodiment differs from the first embodiment in that a convex lens portion is formed to provide the function of a light distribution lens, at least on one surface or side of the transparent cover 41 of the third embodiment. The other components are the same as those in the first embodiment.

The center of the convex lens portion of the transparent cover 41 is alignedwith the optical axis AX1 of the light-emitting diode 32, and the convex lens can be a lens of any shape such as a Fresnel lens and a cylindrical lens. Theprofile (thickness) of the housing 11 can be reduced further, by forming the convex lens portion of the transparent cover 41 just outside the camera-equipped cellular phone 1.

Because the convex lens portion having the function of a light distribution lens is formed in the transparent cover 41 of the third embodiment, the size, weight, and profile can be reduced, in comparison with the first or second embodiment.

### Fourth Embodiment

The first to third embodiments described above use a single light distribution lens or a single transparent cover having a convex lens portion. The direction of light emission varies with individual light-emitting diodes 32. The light-emitting diode 32 is disposed on the circuit board 31 in such a manner that the optical axis AX1 becomes perpendicular to the circuit board 31. Because displacements and the like cannot be avoided on the circuit board 31, irregularities can occur in illuminance on a subject.

In a fourth embodiment described below, the light distribution lens 39 mounted on the light-emitting diode 32 in the second embodiment is used to adjust the direction of light emission from the light-emitting diode 32, and the light distribution lens used in the first or third embodiment is disposed separately, so that variations in light distribution among individual light-emitting diodes, positional variations in production, and other differences are absorbed.

The fourth embodiment differs from the third embodiment in that the light distribution lens 39 of the second embodiment shown in Fig. 3 is added to the structure of the third embodiment shown in Fig. 4. More specifically, the difference is in that both the transparent cover 41 provided with a convex lens having the condensing function, which is shown in Fig. 4, and the light distribution lens 39 having the support 39b, which is shown in Fig. 3, are provided. The other structure is the same as that of the third embodiment.

The curvature of the convex lens portion provided in the transparent cover 41 and the curvature of the lens portion 39a of the light distribution lens 39 can be reduced because the two lenses are used. Accordingly, increase in total dimension in the direction of the optical axis AX1 can be reduced because the two lenses are used.

Because both the transparent cover 41 having the convex lens portion and the light distribution lens 39 having the support 39b are provided, in addition to the merit that the cellular phone of the fourth embodiment can be reduced in size, weight, and profile, there is another merit that variations in light distribution among individual light-emitting diodes, positional variations in production, and other differences can be absorbed.

### Fifth Embodiment

A xenon lamp in the strobe light unit of the conventional camera-equipped cellular phone can be visually recognized, which is not favorable in regard to the appearance. The light-emitting diode 32 and the circuit board 31 in the housing 11 of the cellular phone of any embodiment described above can be visually recognized from the outside, through the transparent cover and the light distribution lens, which is not favorable in regard to the appearance.

In a fifth embodiment described below, a film-like member having optical transmittance varying with the direction of light transmission, such as a half-mirror film, is added to the light 12 of the first embodiment, so that reduction in illuminating power of the light 12 can be suppressed, and the light-emitting diode 32 and the circuit board 31 in the housing 11 cannot be visually recognized from the outside.

Fig. 5 is a cross-sectional view showing the structure of the light 12 according to the fifth embodiment of the present invention. The general structure of the camera-equipped cellular phone 1 of the fifth embodiment is as described with reference to Fig. 1, as it is in the other embodiments described above.

The fifth embodiment differs from the first embodiment in that a film-like member 51 of which front-to-back optical transmittance is lower than back-to-front optical transmittance is disposed between the light-emitting diode 32 and the light distribution lens 33. The other structure of the fifth embodiment is the same as that of the first embodiment.

Extraneous light OL1 which comes from the outside of the cellular phone 1 and passes through the transparent cover 34 and the light distribution lens 33 is attenuated relatively greatly by the film-like member 51. Accordingly, less extraneous light OL1 is reflected from the light-emitting diode 32 and the circuit board 31, and little reflecting light is sent out of the cellular phone 1. While the light-emitting diode 32 is not lighted, it is hard to visually recognize the light-emitting diode 32 and the circuit board 31 from the outside of the housing 11 because the light-emitting diode 32 and the circuit board 31, and their surroundings are dark.

On the other hand, while the light-emitting diode 32 is lighted, light emitted from the light-emitting diode 32 is not greatly attenuated by the film-like member 51, so that a sufficient amount of light can be directed to the subject.

An example of disposing the film-like member 51 between the light-emitting diode 32 and the light distribution lens 33 has been described above, but the film-like member 51 of the fifth embodiment may also be disposed between the light distribution lens 33 and the transparent cover 34, for instance. The film-like member 51 can be combined with any of the first to fourth embodiments.

Because the film-like member 51 of which front-to-back optical transmittance is lower than back-to-front optical transmittance is provided, in addition to the merit that the cellular phone of the fifth embodiment can be reduced in size, weight, and profile, there is another merit that it is hard to visually recognize the light-emitting diode 32 and the circuit board 31, which is favorable in regard to the appearance.

### Sixth Embodiment

In the fifth embodiment described above, the film-like member having optical transmittance varying with the direction of light transmission is added to make it hard to visually recognize the light-emitting diode 32 and the circuit board 31, which is favorable in regard to the appearance. The film-like member 51, however, cannot avoid increasing the amount of reduction in light output from the light-emitting diode, to some extent. An optical diffusion plate formed by providing concaves and convexes (forming elevations or relief) and the like on the surface of a transparent plate also makes it hard to visually recognize the light-emitting diode 32 and the circuit board 31, which is favorable in regard to the appearance, and can suppress the amount of reduction in the light output from the light-emitting diode.

In a sixth embodiment described below, an optical diffusion plate formed by providing concaves and convexes, or the like on the surface of either side is added to the light 12 described in the first embodiment, so that the amount of reduction in the illuminating power of the light 12 is reduced, and it becomes hard to visually recognize the light-emitting diode 32 and the circuit board 31 from the outside.

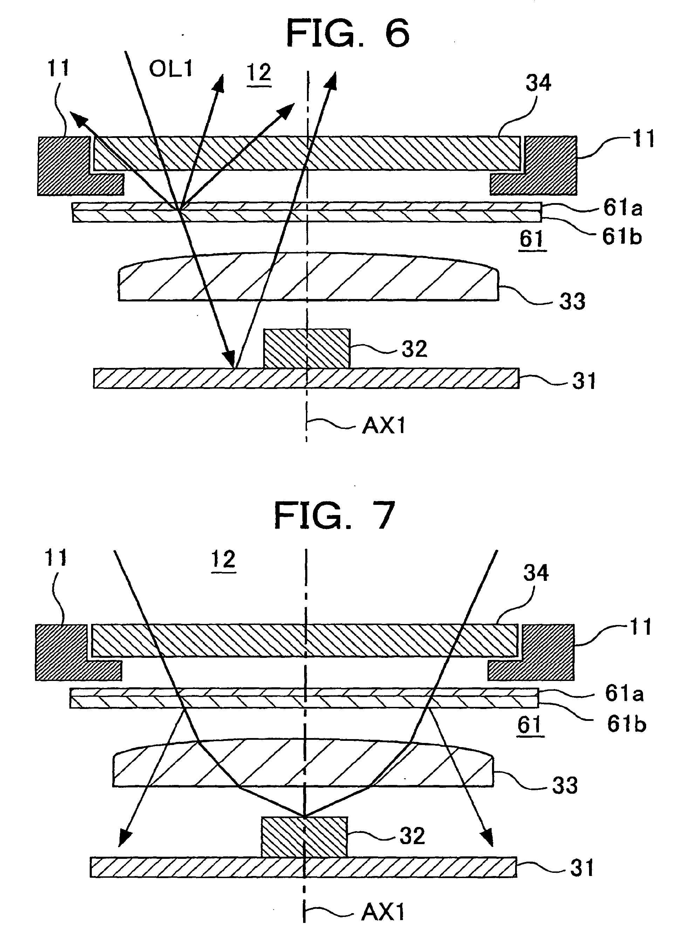

Fig. 6 is a cross-sectional view showing the structure of the light 12 according to the sixth embodiment of the present invention. The general structure of the camera-equipped cellular phone 1 of the sixth embodiment is as described with reference to Fig. 1, as it is in the other embodiments described above.

The sixth embodiment differs from the fifth embodiment in that an optical diffusion plate 61 which shows reflectivity varying with the direction of light transmission because of concaves and convexes provided on one surface or side (subject side: Diffusion layer 61a) of a transparent plate is disposed between the light distribution lens 33 and the transparent cover 34, while the film-like member 51 which has optical transmittance varying with the direction of light transmission is used in the fifth embodiment. The other side of the optical diffusion plate 61 is a flat smooth layer 61b.

The optical diffusion plate 61 is always disposed with the optical diffusion layer 61a facing toward the subject and the smooth layer 61b facing toward the light-emitting diode 32. Because the reflection of light from the surface of the optical diffusion layer 61a is greater than from the surface of the smooth layer 61b, if the optical diffusion layer 61a of the optical diffusion plate 61 faces toward the light-emitting diode 32, which is used as a light source, optical transmittance of light emitted from the light-emitting diode 32 through the optical diffusion plate 61 decreases especially around the center of the light distribution lens 33. The other components are the same as those in the first embodiment.

The diffusion layer 61a of the optical diffusion plate 61 can be formed by forming a multitude of small concaves and convexes on the surface, by forming a multitude of convex-lens-shaped structures, by forming a multitude of small straight grooves, by forming a multitude of small concentric grooves in Fresnel-lens-shaped structures, by providing a multitude of small bead-like transparent balls, or the like, at the surface.

Extraneous light OL1 which comes from the outside of the cellular phone 1 and passes through the transparent cover 34 is reflected relatively greatly from the surface of the diffusion layer 61a of the optical diffusion plate 61, and a small amount of light passes through the optical diffusion plate 61. Reflection of the extraneous light OL1 from the light-emitting diode 32 and the circuit board 31 decreases, and little reflecting light is output from the cellular phone 1. Extraneous light OL1 is reflected from the light-emitting diode 32 and the circuit board 31, and reflection toward the outside of the cellular phone 1 is diffused again by the surface of the diffusion layer 61a. Accordingly, it becomes hard to visually recognize the light-emitting diode 32, the circuit board 31, and the like from the outside of the housing 11. While the light-emitting diode 32 is not lighted, the light-emitting diode 32, the circuit board 31, and the like become invisible from the outside of the housing 11.

On the other hand, while the light-emitting diode 32 is lighted, a relatively small amount of light emitted from the light-emitting diode 32 is reflected from the surface of the smooth layer 61b of the transparent optical diffusion plate 61, as shown in Fig. 7, so that a sufficient amount of light can be directed to the subject.

An example of disposing the optical diffusion plate 61 between the light distribution lens 33 and the transparent cover 34 is described above, but the optical diffusion plate 61 of the sixth embodiment may also be disposed between the light-emitting diode 32 and the light distribution lens 33, for instance. The optical diffusion plate 61 can also be combined with any of the first to fourth embodiments.

In the sixth embodiment, the optical diffusion plate 61 is disposed with the optical diffusion layer facing toward the subject; light reflectivity in the front (the surface of the optical diffusion layer 61a) of the optical diffusion plate 61 is greater than light reflectivity in the back (the surface of the smooth layer 61b); and light transmitted from the inside to the outside is diffused again by the optical diffusion plate. As a result, in addition to the merit that the size, weight, and profile of the cellular phone can be reduced further, there are additional merits that the amount of attenuation of illuminating light emitted from the light-emitting diode 32 is reduced, to improve the optical transmittance, and it is hard to visually recognize the light-emitting diode 32 and the circuit board 31, which is favorable in regard to the appearance.

### Seventh Embodiment

In the sixth embodiment described above, because the optical diffusion plate which has light reflectivity varying with the direction of light transmission and diffuses the transmitted light is added, it is hard to visually recognize the light-emitting diode 32 and the circuit board 31, which is favorable in regard to the appearance, and the optical transmittance of illuminating light emitted from the light-emitting diode 32 is improved. However, it is inevitable that the optical diffusion layer 61a diffuses light emitted from the light-emitting diode. Light diffused by the optical diffusion layer 61a in the vicinity of the optical axis AX1 is likely to reach the subject while light diffused in the outer periphery portion or outer edge portion diverge beyond the view angle of the camera and is relatively hard to reach the subj ect. Therefore, forming such an optical diffusion layer 61a that the radiation angle decreases from the optical axis AX1 toward the periphery would be effective to increase the amount of light which reaches the subject.

In a seventh embodiment described below, the optical diffusion plate of the light 12 used in the sixth embodiment is provided with the optical diffusion layer 61a formed to have a diffusion angle decreasing, from the optical axis AX1 toward the periphery, in order to make it hard to visually recognize the light-emitting diode 32 and the circuit board 31 from the outside and to suppress the amount of diffusion of illumination by the light 12.

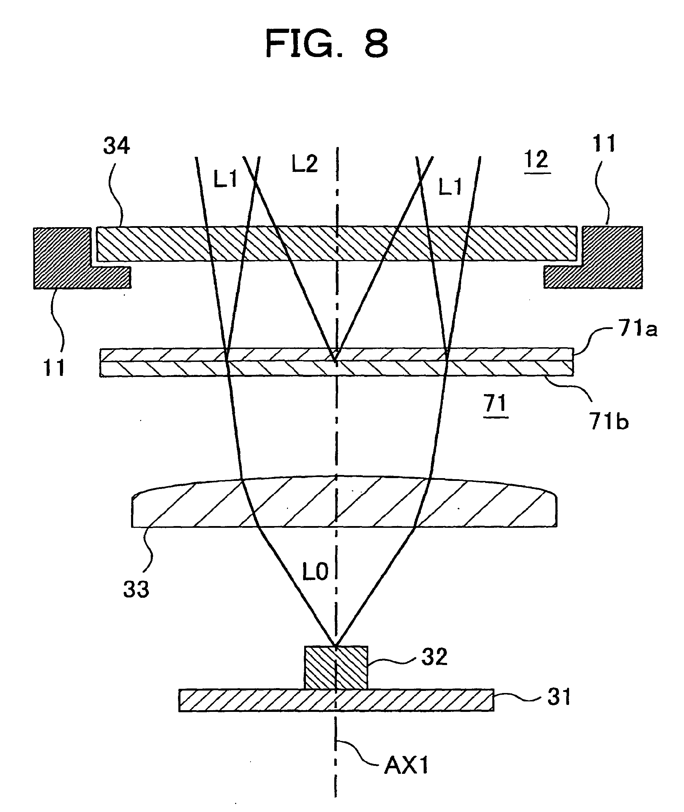

Fig. 8 is a cross-sectional view showing the structure of the light 12 according to the sixth embodiment of the present invention. The general configuration of the camera-equipped cellular phone 1 of the seventh embodiment is as described with reference to Fig. 1, as it is in the other embodiments described above.

The seventh embodiment differs from the sixth embodiment in that concave-convex-shaped structures are formed on the optical diffusion layer 61a of the optical diffusion plate 61 with the shapes changed gradually or in steps from the optical axis AX1 toward the periphery, while the optical diffusion layer 61a of the sixth embodiment has a surface of even configuration.

In the seventh embodiment, concave-convex-shaped structures are formed by providing small balls or by forming small convex-lens-shaped structures (formed by a polymeric material or the like). The other components are the same as those of the sixth embodiment.

Fig. 8 shows that after the output luminous flux L0 of the light-emitting diode reaches the optical diffusion plate 71, luminous flux L2 of light diffused in the center of the optical diffusion layer 71a of the optical diffusion plate 71 has a greater diffusion angle than luminous flux L1 of light diffused in the peripheral part. Because the amount of light diffusion in the peripheral part of the optical diffusion plate 71 decreases, the amount of light diffusion beyond the view angle can be reduced. Therefore, the amount of light within the view angle increases, and the subject can be illuminated brightly.

As has been described, according to the seventh embodiment, because the angle of diffusion at the surface of the optical diffusion layer 71a of the optical diffusion plate 71 from the center toward the periphery of the optical diffusion plate 71. As a result, in addition to the merits that the size, weight, and profile of the cellular phone can be reduced, the amount of attenuation in illuminating light emitted from the light-emitting diode 32 can be suppressed, to improve the optical transmittance, and it is hard to visually recognize the light-emitting diode 32 and the circuit board 31, which is favorable in regard to the appearance, there is another merit that the amount of light within the view angle can be increased.

### Eighth Embodiment

In the embodiments described above, the light 12 is built into the cellular phone 11. The present invention can be applied to an arrangement with a detachable external light.

In an eighth embodiment described below, the light 12 in the embodiments described above is provided as a detachable independent external light.

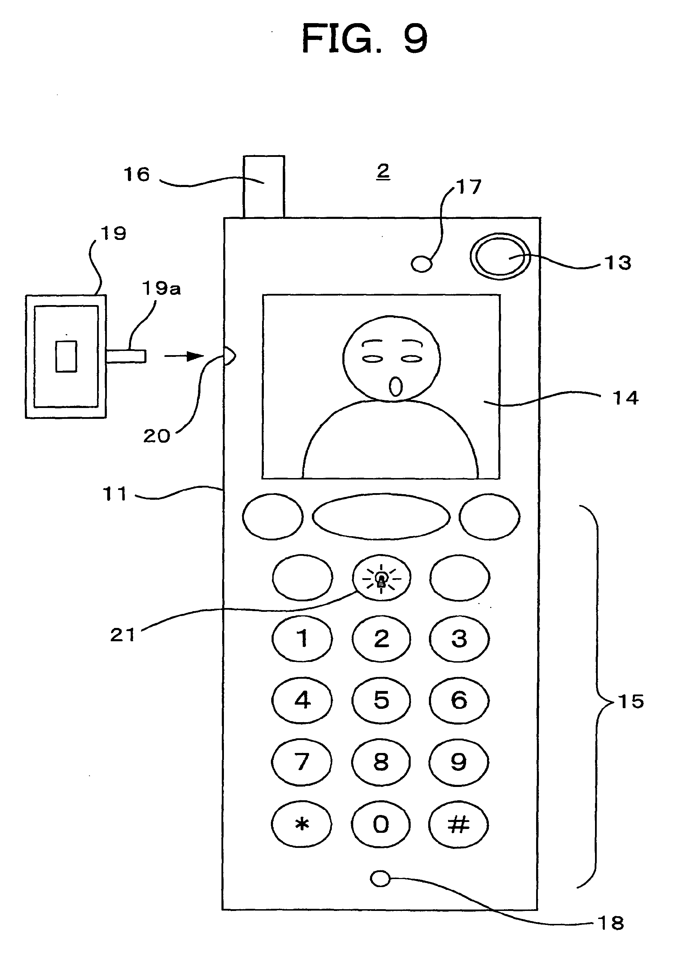

Fig. 9 shows an external shape of the camera-equipped cellular phone according to the eighth embodiment of the present invention.

The eighth embodiment differs from the first embodiment in that an external light 19 of the eighth embodiment is independent of the camera-equipped cellular phone 2 while the light 12 is included in the camera-equipped cellular phone 1 of the first embodiment; the external light 19 is provided with a plug 19a which enables an electric and mechanical connection to the camera-equipped cellular phone 2; and the camera-equipped cellular phone 2 is provided with a jack 20 which allows the plug 19a of the external light 19 to be detachably connected. The other components are the same as those in the first embodiment.

The light 12 of the camera-equipped cellular phone 1 of the first embodiment is turned on or off by the switch 21 actuated by the shooting person or in accordance with the output of the light amount detection device such as an optical sensor. In the eighth embodiment, the external light 19 can be turned on by inserting the plug 19a into the jack 20, and the external light 19 can be turned off by removing the plug 19a from the jack 20, for instance. This eliminates the need for the switch 21 or the light amount detection device, and the light can be used when needed.

Therefore, because the camera-equipped cellular phone of the eighth embodiment is provided with the jack 20, and the separate light 19 is provided with the plug 19a which enables an electrical and mechanical connection to the jack 20, the camera-equipped cellular phone does not include a light and does not require a light switch, so that the size, weight, and profile can be reduced further than that of the first embodiment.

As has been described, the camera-equipped cellular phone of the eighth embodiment uses a detachable external light. As a result, in addition to the merits that a subject can be continuously illuminated by the light 12 while a moving picture is being taken by the camera 13, and both a still picture and a moving picture of the subject can be taken by the camera 13 in low light, there is another merit that the cellular phone can be reduced in size, weight, and profile, in comparison with that of the first embodiment.

Because the lighting unit (external light) is a separate unit detachable from the camera-equipped cellular phone and need not be included in the camera, the camera (cellular phone) can be reduced in size, weight, and profile, and the maintenance and replacement of the lighting unit is facilitated.

### Ninth Embodiment

In the sixth embodiment described above, the optical diffusion plate 61 disposed between the light distribution lens 33 and the transparent cover 34 is formed by providing concave-convex-shaped structures on one surf ace or side (subject side: Diffusion layer 61a) of a transparent plate and has light reflectivity varying depending on the direction of light transmission. The other side of the optical diffusion plate 61 is a flat surface of a smooth layer 61b. This is because when the light emitted from the light-emitting diode 32 passes through the optical diffusion plate 61, optical transmittance decreases especially around the center of the light distribution lens 33.

If it is desired that variations in distribution of illumination be suppressed by equalizing optical transmittance around the center and in the peripheral part of the light distribution lens 33 when the light emitted from the light-emitting diode 32 passes through the optical diffusion plate, an optical diffusion layer with concave-convex structures or the like formed on the surface of the transparent plate can be formed just on the diode side or on both the subject side and the diode side.

In such a case, it becomes hard to visually recognize the light-emitting diode 32 and the circuit board 31 from the outside, which is favorable in respect of the appearance. The level of optical transmittance is slightly lower than that of the sixth embodiment, but there is no problem in practical use.

In a ninth embodiment describedbelow, a side of the optical diffusion plate where concave-convex-shaped structures are formed as described in the sixth embodiment is provided on the side of the light-emitting diode alone or on both of the side of the light-emitting diode and the subject side, so that variations in distribution of the amount of light radiated from the light 12 is suppressed, and it becomes hard to visually recognize the light-emitting diode 32 and the circuit board 31 from the outside.

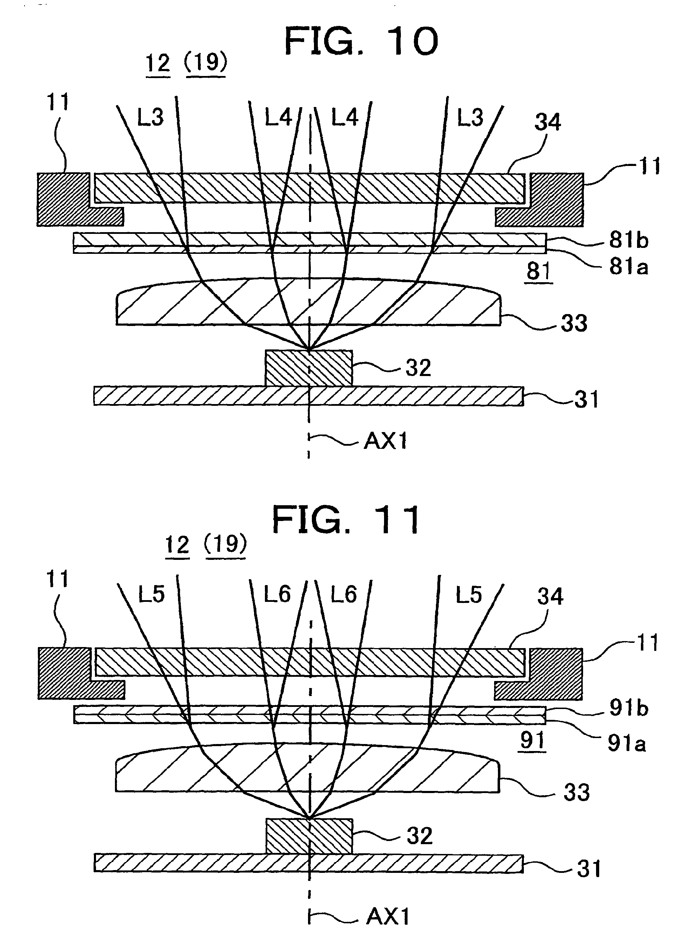

Fig. 10 and Fig. 11 are cross-sectional views showing the structure of the light 12 or the light 19 according to the ninth embodiment of the present invention. The general structure of the camera-equipped cellular phone 1 according to the ninth embodiment is as described with reference to Fig. 1, as it is in the other embodiments described above.

The light 12 or light 19 according to the ninth embodiment shown in Fig. 10 differs from that of the sixth embodiment in that the light 12 or light 19 according to the ninth embodiment has an optical diffusion layer 81a on the side of the light-emitting diode 32 and a smooth layer 81b on the side of the subject, while the optical diffusion plate 61 of the sixth embodiment has the optical diffusion layer 61a on the side of the subject and the smooth layer 61b on the side of the light-emitting diode 32.

The light 12 or light 19 according to the ninth embodiment shown in Fig. 11 differs from that of the sixth embodiment in that the light 12 or light 19 according to the ninth embodiment has an optical diffusion layer 91a and an optical diffusion layer 91b on both the side of the light-emitting diode 32 and the side of the subj ect and has no smooth layer, while the optical diffusion plate 61 of the sixth embodiment has the optical diffusion layer 61a just on the side of the subject and has the smooth layer 61b on the side of the light-emitting diode 32.

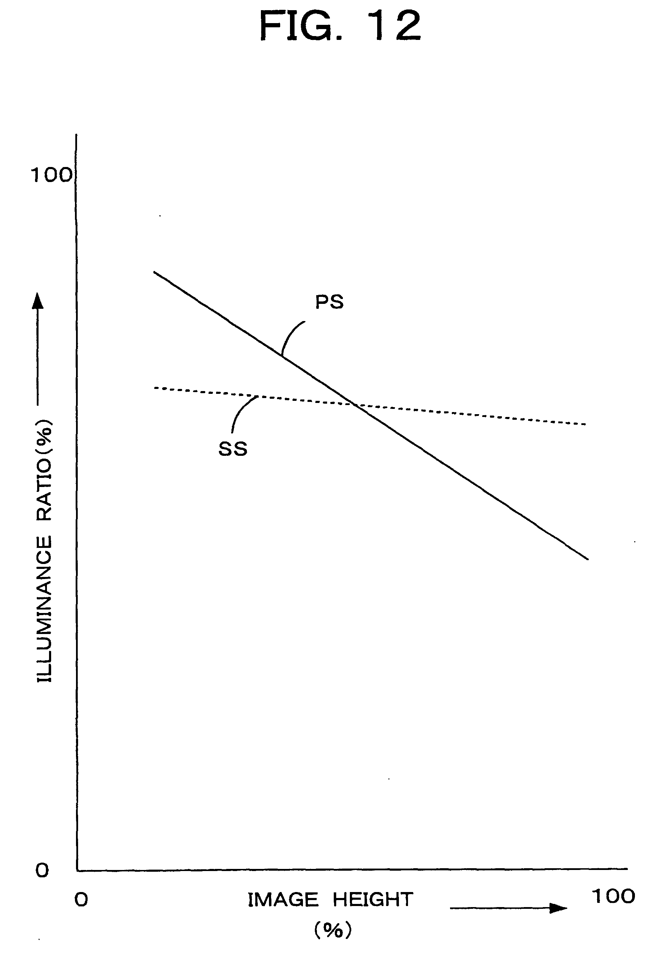

Fig. 12 shows the relationship between image height (%: Horizontal axis) and illuminance ratio (%: Vertical axis) with the sixth embodiment, where the diffusion layer of the optical diffusion plate 61 is provided on the side of the subject, and with the ninth embodiment, where the diffusion layer of the optical diffusion plate 81 is provided on the side of the light source (light-emitting diode 32).

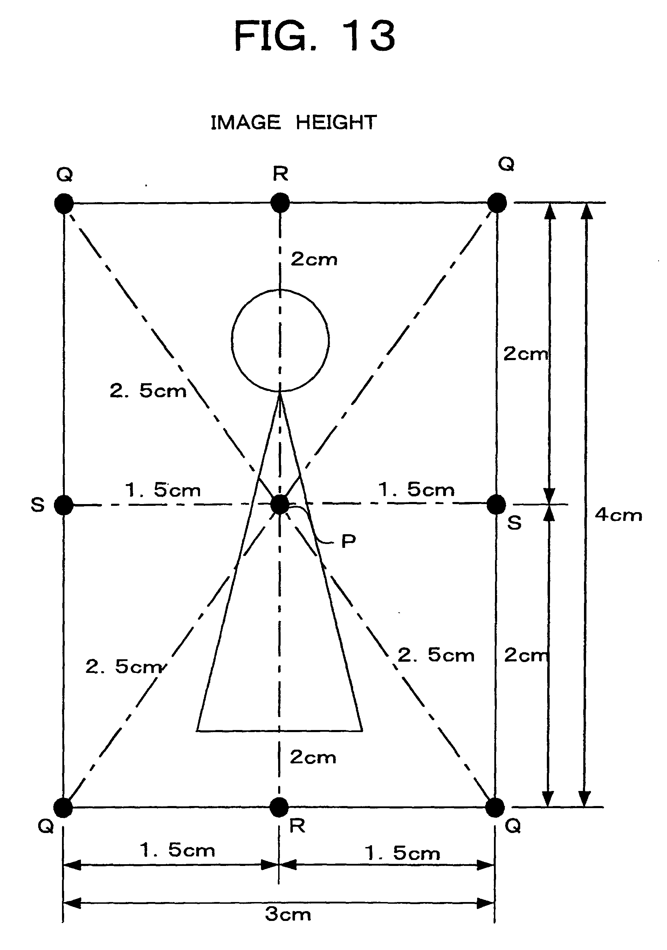

The image height represented by the horizontal axis of the illustration shown in Fig. 12 is a ratio of distance from the center in percentage, with reference to the distance between the center and the farthest position of the obtained image, as will be described later with reference to Fig. 13. The illuminance ratio is a ratio of illumination with the diffusion layer to illumination without the diffusion layer.

In Fig. 12, a line PS representing the ratio with the diffusion layer provided on the side of the subject indicates that the illuminance ratio (%) remarkably decreases as the image height (%) increases toward 100%. Like the line PS, a line SS representing the ratio with the diffusion layer provided on the side of the light source indicates that the illuminance ratio decreases inversely with the image height, but the inclination is smaller than the inclination of the PS. The line PS shown in Fig. 12 indicates that when light emitted from the light-emitting diode 32 passes through the optical diffusion plate 61 with the diffusion layer provided on the side of the subject, optical transmittance is not very low (is not lowered to a large extent) in the center region and decreases significantly in the peripheral region. The line SS shown in Fig. 12 indicates that when light emitted from the light-emitting diode 32 passes through the optical diffusion plate 61 with the diffusion layer provided on the side of the light source, optical transmittance is lower (lowered to a larger extent) in the center region and does not decrease significantly in the peripheral region.

Fig. 13 illustrates the image height in the ninth embodiment.

For instance, in an image of 4 cm long and 3 cm wide, as shown in Fig. 13, the image height of the center P is 0%, and the image height of the corner Q is 100%. The position R at the center of a horizontal side has an image height of 80%, and the position S at the center of a vertical side has an image height of 60%. A horizontal side, a vertical side, and a chain line form a right triangle, as shown in Fig. 13, and the sides are in the ratio of 3:4:5. The shorter leg is 1.5 cm long, the longer leg is 2 cm long, and the hypotenuse is 2.5 cm long. Taking the hypotenuse as 100%, the shorter leg is 60%, and the longer leg is 80%.

When the optical diffusion plate 81 according to the ninth embodiment with the diffusion layer provided on the side of the light source (light-emitting diode 32) is used the difference in illumination between the center region and the peripheral region is reduced, so that variations in distribution of amount of light radiated from the light 12 can be suppressed, and it is hard to visually recognize the light-emitting diode 32 and the circuit board 31 from the outside.

Fig. 12 shows that if the diffusion layer 61a is provided on the side of the subject as in the sixth embodiment, a higher illuminance can be maintained in the center of the optical diffusion plate, but the difference in illuminance between the center region and the peripheral region is very large. If the diffusion layer 81a is provided on the side of the light source, which is on the side of the light-emitting diode 32 as in the ninth embodiment, as shown in Fig. 10, illuminance in the center is relatively low, but decrease in illuminance in the peripheral region is relatively small. The optical diffusion plate 91 with two diffusion layers 91a and 91b as shown in Fig. 11 also produces a similar result to that shown in Fig. 10 because the diffusion layer 91a is provided on the side of the light source.

If the optical diffusion plate 81 shown in Fig. 10 or the optical diffusion plate 91 shown in Fig. 11 is used with the lighting device 12 shown in Fig. 1 or the lighting device 19 shown in Fig. 9, decrease in illuminance in the peripheral region with respect to the center region is effectively reduced. If the subject is not confined to in the center region and extends to the peripheral region, for instance, decrease in illuminance in the peripheral region can be suppressed efficiently, and the subject can be shot very well.

If the optical diffusion plate 91 shown in Fig. 11 is used, light entering from the outside is diffused by the diffusion layer 91b of the optical diffusion plate 91 provided on the side of the subj ect, and reflecting light is diffused by the diffusion layer 91a of the optical diffusion plate 91 provided on the side of the light source. The diffusion layers diffuse both entering and reflecting extraneous light, making it hard to visually recognize the light-emitting diode 32 and other internal components from the outside while the light-emitting diode 32 is not lighted.

Whether to improve illuminance in the center region by providing the diffusion layer 61a just on the side of the subject as in the sixth embodiment or to decrease a difference in illuminance between the center region and the peripheral region as in the ninth embodiment should be selected in accordance with the performance and characteristics (specification) of the light distribution lens 33.

The diffusion layer described above is formed on the surface of the diffusion plate 61, 81, or 91 in the sixth embodiment and in the ninth embodiment, but the diffusion layer may also be formed on the surface of the light distribution lens 33 or the transparent cover 34, for instance. That is, the optical diffusion portion for diffusing light may be provided in a component which has a side (or a surface) orthogonal to light emitted from the light-emitting diode and allows light emitted from the light-emitting diode to pass through (the light distribution lens 33, the transparent cover 34, or the like), at least at one orthogonal side (surface) of the component.

The optical diffusion layer may also be formed in such a manner that the angle of light diffusion in the peripheral region becomes smaller than that around the optical axis of the light-emitting diode 32, as described in connection with the seventh embodiment.

### ((28-10)AB

The optical diffusion layer (or optical diffusionportion) for diffusing light may be formed on the independent optical diffusion plate as in the embodiments described above and may also be provided in a component which has a side (surface) orthogonal to light emitted from the light-emitting diode and allows light emitted from the light-emitting diode to pass through (the light distribution lens 33, the transparent cover 34, or the like) , at least in one orthogonal side (surface) of the component, such as the back of the transparent cover, for instance.

### Tenth Embodiment

Generally, the printed circuit board 31 on which the light-emitting diode 32 is mounted in the embodiments described above has a brownish color as in the case of Bakelite or a green color as in the case of glass epoxy, and light reflectivity on the surface is not good. In a tenth embodiment described below, a flat portion having a highly reflective surface is provided on the printed circuit board 31, in order to increase the reflectivity of the printed circuit board.

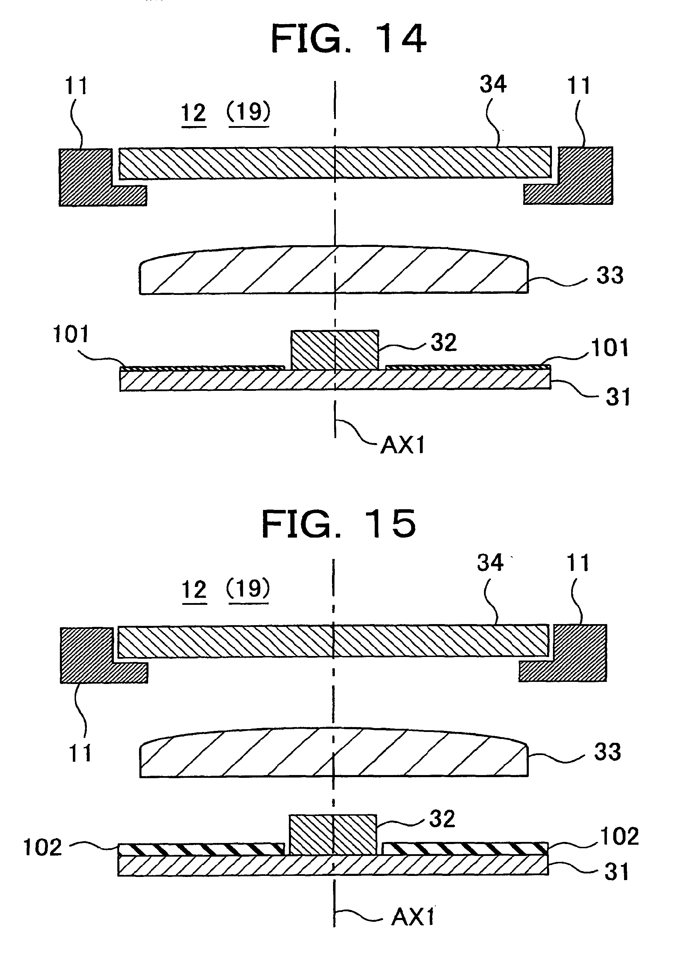

Fig. 14 and Fig. 15 are cross-sectional views showing the structure of the light 12 or the light 19 according to the tenth embodiment of the present invention. The general structure of the camera-equipped cellular phone 1 according to the tenth embodiment is as described with reference to Fig. 1, as it is in the other embodiments described above.

The light 12 or the light 19 according to the tenth embodiment shown in Fig. 14 differs from that of the first embodiment in that, according to the tenth embodiment, the surface of the printed circuit board 31 on which the light-emitting diode 32 is mounted has a reflection portion 101 having a smooth layer with a surface of a highly-reflective color, such as white or silver formed by silkscreen printing or other printing technique, at least in an area around the light-emitting diode 32, while, according to the first embodiment, just the light-emitting diode 32 is directly mounted on the printed circuit board 31 and no device for improving reflectivity is provided on the plate.

Also, in Fig. 15, the reflection portion 102 having a smooth layer with a surface of a highly reflective color such as white or silver, is formed not by silkscreen printing but by, for instance, attaching a flat sheet (film-like member) having a highly reflective surface, such as aluminum foil (metal foil) , on the printed circuit board 31.

In the structure shown in Fig. 14 or Fig. 15, part of light emitted from the light-emitting diode 32 is reflected from the surface of the transparent cover 34 or the light distribution lens 33, back to the surface of the printed circuit board 31. The returned light is reflected again from the reflection portion 101 or the reflection portion 102, to the side of the subject (outside) , so that the amount of light directed to the subject increases, improving the illuminance of the subject.

Concave-convex-shaped structures for diffusing light may also be provided on the surface of the reflection portion 101 or the reflection portion 102 on the side of the subject, so that variations in distribution of illumination of the subject can be reduced, and it becomes hard to visually recognize the light-emitting diode and the circuit board, the light distribution characteristics of the lighting unit is improved in regard to the appearance.

In the tenth embodiment, a flat part for improving reflectivity is provided at least around the light-emitting diode 32 on the surface of the printed circuit board 31 where the light-emitting diode 32 is mounted, so that light reflected toward the light-emitting diode is reflected again from the surface of the light distribution lens 33, the transparent cover 34, and the like, back to the subject side. Because the amount of light directed to the subject increases, the illuminance of the subject can be improved.

If concave-convex-shaped structures for diffusing light are provided on the surface of the reflection portion on the side of the subject, variations in distribution of illumination of the subject can be reduced, and it becomes hard to visually recognize the light-emitting diode and the circuit board, the light distribution characteristics of the lighting unit is improved in regard to the appearance. Because the optical diffusion plate can be made thin or becomes unnecessary, the cellular phone can be reduced further in size, weight, and profile.

### Eleventh Embodiment

In the embodiments described above, reflectivity of the printed circuit board on which the light-emitting diode 32 is mounted is improved by providing a highly reflective surface on the printed circuit board 31. If the height of the light-emitting diode 32 on the printed circuit board 31 is large, the distance between the light-emission surface of the light-emitting diode 32 and the surface of the printed circuit board 31 becomes large, preventing the reflectivity on the surface of the printed circuit board 31 from being improved. In an eleventh embodiment described below, a structure which has some height from the surface of the printed circuit board 31 and has a highly reflective surface on the side of the subject is provided on the printed circuit board 31, so that the reflectivity of the printed circuit board can be improved.

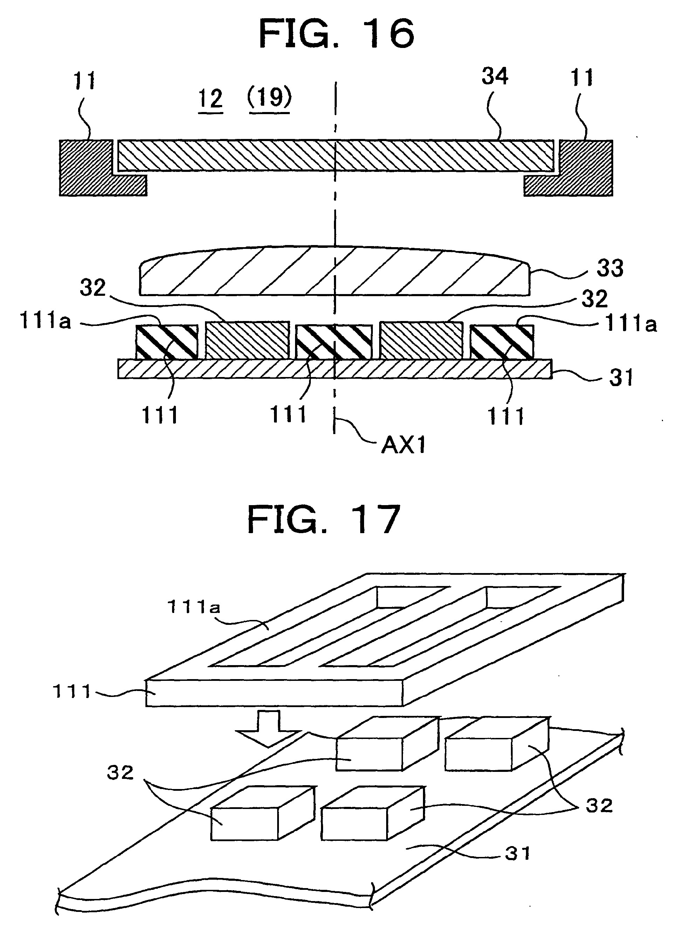

Fig. 16 is a cross-sectional view showing the structure of the light 12 or the light 19 in the eleventh embodiment of the present invention. Fig. 17 is a perspective view showing an example of a general shape of the structure shown in Fig. 16. The general structure of the camera-equipped cellular phone 1 according to the eleventh embodiment is as described with reference to Fig. 1, as it is in the other embodiments described above.

The light 12 or the light 19 in the eleventh embodiment shown in Fig. 16 or Fig. 17 differs from the light in the tenth embodiment in that a structure 111 is used to provide a reflection portion 111a closer to the light distribution lens 33, in order to decrease a difference in height from the light emission surface of the light-emitting diode 32, while, according to the tenth embodiment, the reflection portion 101 having a smooth layer with a surface of a highly reflective color such as white or silver is provided as a device for improving the reflectivity of the surface of the printed circuit board 31, at least around the light-emitting diode 32 on the side of the light-emitting diode 32 of the printed circuit board 31, by silkscreen printing or the other printing technique.

The structure 111 may be mounted to the printed circuit board 31 by an adhesive or by a fastening member such as a screw, or the structure 111 may have a fastening hook.

Fig. 16 and Fig. 17 show that there are four light-emitting diodes, but the number of light-emitting diodes may be changed in accordance with the desired illuminance of the subject and the amount of light of each light-emitting diode 32. For instance, if the amount of light of the light-emitting diode provides desired illuminance of the subject, the number of the light-emitting diodes may be one as in the embodiments described above or may be two or greater.

The structure 111 is provided by molding plastic into such a shape that at least a part of the side surface (wall) of the light-emitting diode 32 is enclosed. Because the surface 111a of the structure 111 on the side of the subject must be highly reflective, plastic of a highly reflective color such as white, yellow, silver, or gold is used for molding.

If plastic of a highly reflective color cannot be used for the structure 111, at least the surface on the side of the subj ect may be painted in a highly reflective color such as white, yellow, silver, or gold, or a metal film may be evaporated (vapor-deposited) or coated at least onto the surface on the side of the subject.

Concave-convex-shaped structures for diffusing light may be provided on the surface of the reflection portion 111a on the side of the subject, in order to reduce variations in distribution of illuminance of the subject and to make it hard to visually recognize the light-emitting diode and the circuit board, and to improve the light distribution characteristics of the lighting unit in respect to the appearance.

In the structure shown in Fig. 16 and Fig. 17, part of light emitted from the light-emitting diode 32 is reflected from the surface of the transparent cover 34 or the light distribution lens 33, back to the surface of the reflection portion 111a, and the reflecting light is reflected again from the reflection portion 111a toward the subject (outside). The reflection portion 111a is closer to the light distribution lens 33 than the reflection portion 101 or the reflection portion 102 provided on the circuit board in the tenth embodiment, so that the difference in level from the light emission surface of the light-emitting diode 32 is reduced. Accordingly, the amount of light directed to the subject becomes greater than that in the tenth embodiment, and illuminance of the subject is improved.

Because a structure for improving reflectivity is provided at least around the light-emitting diode 32 on the surface of the printed circuit board 31 on which the light-emitting diode 32 is mounted, a greater amount of light reflected from the surface of the light distribution lens 33, the transparent cover 34, or the like toward the side of the light-emitting diode can be reflected again toward the subj ect side, and the amount of light directed to the subject can be increased further, thus illuminance of the subj ect can be improved further in the eleventh embodiment.

If concave-convex-shaped structures for diffusing light is provided on the surface of the reflection portion on the side of the subject, variations in distribution of illuminance of the subject can be reduced. It becomes harder to visually recognize the light-emitting diode and the circuit board, and the light distribution characteristics of the lighting unit is improved in respect to the appearance. Because the optical diffusion plate can be made thin or becomes unnecessary, the cellular phone can be reduced further in size, weight, and profile.

In the embodiments described above, one or four light-emitting diodes are used. The lighting unit of the present invention, however, may also use two, three, or five or more light-emitting diodes.

### Twelfth Embodiment

It was indicated that, in the sixth embodiment described above, a multitude of small bead-like transparent balls may be disposed at the surface of the diffusion layer 61a of the optical diffusion plate 61. In the eighth embodiment described above, the relationship between image height and illuminance ratio depends on whether the diffusion layer 61a of the optical diffusion plate 61 is on the side of the subject or on the side of the light source.

In a twelfth embodiment described below, the structure of the optical diffusion plate 61 and the orientation of the diffusion layer 61a will be described in detail.

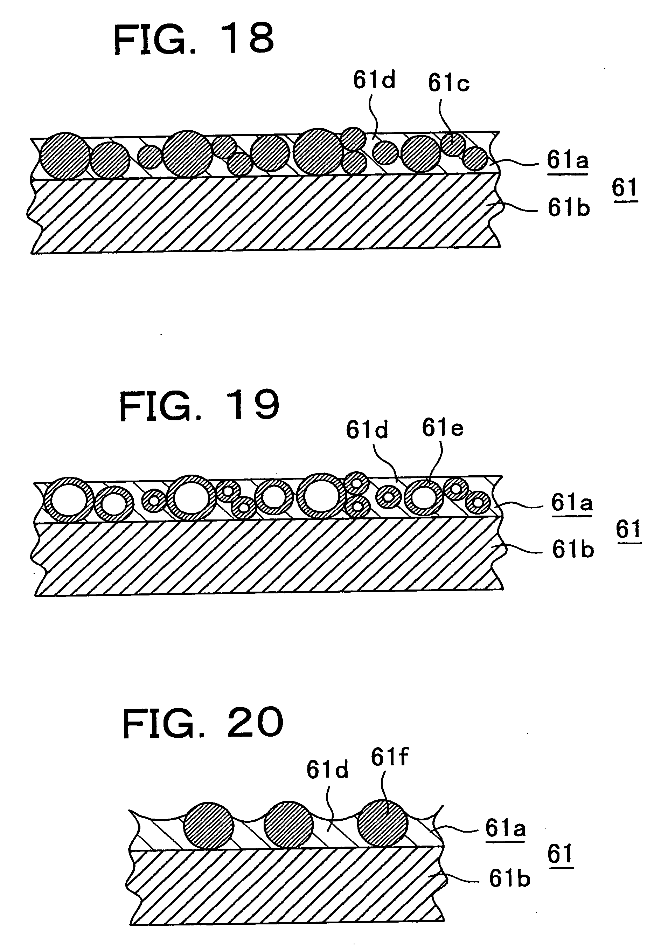

Fig. 18, Fig. 19, Fig. 20, and Fig. 21 are cross-sectional views showing the structure of the optical diffusion plate 61 according to the twelfth embodiment of the present invention. The general structure of the camera-equipped cellular phone 1 according to the twelfth embodiment is as described with reference to Fig. 1, as it is in the other embodiments described above.

The optical diffusion plate 61 according to the twelfth embodiment shown in Fig. 18 has a diffusion layer 61a and a smooth layer 61b, and the diffusion layer 61a has bead-like transparent balls 61c and a binder 61d. Some of the bead-like transparent balls 61c protrude from the surface of the diffusion layer 61a, so that concave-convex-shaped structures are formed at the surface of the diffusion layer 61a. The optical diffusion property of the diffusion layer 61a is produced by a large difference in refractive index between the air and the bead-like transparent balls 61c. If the bead-like transparent balls 61c protrude substantially from the surface of the diffusion layer 61a, and the degree of the roughness increases, the area of the interface between the bead-like transparent balls 61c and the air becomes larger. This increases the degree of lightdiffusion, making it hard to visually recognize the light-emitting diode 32. Conversely, if the degree of roughness is small and the surface becomes smoother, the area of the interface between the bead-like transparent balls 61c and the air becomes smaller. This decreases the degree of light diffusion, making it easy to see the light-emitting diode 32.

Used as the bead-like transparent balls 61c may be glass, acrylic resin, styrene resin, silicone resin, or the like, such as acryl, acrylonitrile, polyurethane, polyvinyl chloride, polystyrene, polyacrylonitrile, polyamide, and silicone rubber. The balls may be replaced with members in the shape of a cube, a needle, a rod, a spindle, a plate, a scale, or a fiber, but ball-shaped beads are preferable in respect of the optical diffusion, and truly spherical or nearly truly spherical beads are most favorable. This is because each spherical particle acts as a micro-lens, increasing the degree of light diffusion. More specifically, an average particle diameter of 1 µm to 50 µm is a fair compromise between optical diffusion and the capability of making it hard to see the light-emitting diode provided as a light source.

Used as the binder 61d may be acrylic resin, polyurethane, polyester, fluorine resin, silicone resin, polyamide-imide, epoxy resin, or the like. A desired thickness of the binder 61d ranges from 1 µm to 30 µm, depending on the particle diameter of the bead-like transparent balls 61c.

Used as the smooth layer 61b, which is the base of the optical diffusion plate 61, may be acrylic resin, styrene resin, polycarbonate, vinyl chloride resin, or the like. The thickness of the smooth layer 61b would not be specified especially, but a thickness between 50 µm to 200 µm would be favorable in the respect of ease of fabrication of the optical diffusion plate 61.

Fig. 12 shows the relationship between image height (%: Horizontal axis) and illuminance ratio (%: Vertical axis) when the diffusion layer 61a of the optical diffusion plate 61 is provided on the side of the subject and when the diffusion layer 61a is provided on the side of the light source (light-emitting diode 32) , as described in connection with the ninth embodiment. The line PS in Fig. 12 indicates that when light emitted from the light-emitting diode 32 passes through the optical diffusion plate 61 with the diffusion layer provided on the side of the subject, optical transmittance is not very low (is not lowered to a large extent) in the center region and decreases significantly in the peripheral region. The line SS in Fig. 12 indicates that when light emitted from the light-emitting diode 32 passes through the optical diffusion plate 61 with the diffusion layer provided on the side of the light source, optical transmittance in the center region is lower (is lowered to a large extent) and does not decrease significantly in the peripheral region.

When taking a moving picture, the camera must be operated for a long period, and a large amount of power is needed to support the operation of the camera. Because of demand for reduction in thickness and size of cellular phones, it is required that batteries to be mounted in the cellular phones be thin and compact and that the number of necessary batteries be decreased. It would be hard to use a special battery for a camera, and a battery for another electronic component is shared with a camera in many cases. The shared battery must also be thin and compact, so that it is hard to increase the battery capacity. Accordingly, a low-power camera may be used to minimize the power consumption by the camera operation. The low-power camera, however, tends to have a low light receiving sensitivity. On the other hand, the amount of light by a light utilizing a light-emitting diode is far smaller than the amount of light by a light utilizing a xenon lamp or the like. Therefore, when a camera having a low light receiving sensitivity and a light-emitting diode producing a small amount of light is used to take a picture, the optical diffusion plate 61 is disposed in front of the light-emitting diode 32 with the diffusion layer 61a facing toward the subject side to ensure a certain absolute amount of light, and shooting of a subject is performed under the illuminance ratio of light emitted from the light 12 having a distribution as indicated by the line PS in Fig. 12. A fine picture of a subject can then be taken.

A low-power camera as described above is more suitable for taking a moving picture than a still picture.

In order to satisfy a camera performance requirement of suppressing the ratio in light amount between the center region and peripheral region of a camera, the design of the camera must be such that a larger number of lenses can be mounted. However, in a cellular phone which should be made thin, the size of the camera including lenses cannot be increased. If a subject is shot by a camera of which light amount decreases significantly in the peripheral region, with the optical diffusion plate 61 disposed in front of the light-emitting diode 32 with the diffusion layer 61a facing toward the subject side, when the illuminance ratio of light emitted from the light 12 is distributed as indicated by the line PS in Fig. 12, the peripheral part of the image becomes very dark in comparison with the center region. In order to avoid this, a camera having a high light receiving sensitivity may be used. A camera having a high light receiving sensitivity can take a picture under a small amount of light. For that type of camera, the distribution of illuminance ratio is more important than the absolute amount of light. A fine picture of a subject can be taken by that type of camera when the optical diffusion plate 61 is disposed in front of the light-emitting diode 32 with the diffusion layer 61a facing toward the side of the light source and when the illuminance ratio of light emitted from the light 12 is distributed as indicated by the line SS in Fig. 12. A camera having a high light receiving sensitivity tends to consume a large power. Therefore, a camera having a high light receiving sensitivity is more suitable for taking a still picture than a moving picture.

Whether the diffusion layer 61a of the optical diffusion plate 61 is made to face toward the side of the subject or the side of the light source may be determined in accordance with the characteristics of the camera, described above in connection with the ninth embodiment, as well as the performance and characteristics (specification) of the light distribution lens. Of course, the light distribution lens can be omitted, depending on the characteristics (specification) and performance of the camera.

The optical diffusion plate 61 according to the twelfth embodiment shown in Fig. 19 has the diffusion layer 61a and the smooth layer 61b, and the diffusion layer 61a includes hollow bead-like transparent balls 61e and a binder 61d. The optical diffusion plate differs from the plate shown in Fig. 18 in that the bead-like transparent balls 61e included in the diffusion layer 61a have internal spaces, that is, the balls are hollow. The bead-like transparent balls 61c are interfaced with air only at the surface of the diffusion layer 61a, as shown in Fig. 18, so that optical diffusion occurs just at the surface of the diffusion layer 61a. With the hollow bead-like transparent balls 61e as shown in Fig. 19, optical diffusion occurs because of light refraction occurring also at the interface between the internal wall of the hollow bead-like transparent ball 61e and the internal space of the ball. The hollow bead-like transparent balls offer greater optical diffusion than the solid bead-like transparent balls 61c shown in Fig. 18, so that the diffusion layer produces greater optical diffusion than the dif fusion layer 61a shown in Fig. 18.

The optical diffusion plate 61 according to the twelfth embodiment shown in Fig. 20 has a diffusion layer 61a and a smooth layer 61b, and the diffusion layer 61a includes bead-like transparent balls 61f and a binder 61d. The plate differs from the plate shown in Fig. 18 in that wavy concave-convex-shaped structures (elevations or relief) are formed at the surface of the binder 61d, between the bead-like transparent balls 61f. With the wavy concave-convex-shaped structures formed at the surface of the binder 61d, the binder 61d also diffuses light, increasing the optical diffusion by the diffusion layer 61a.

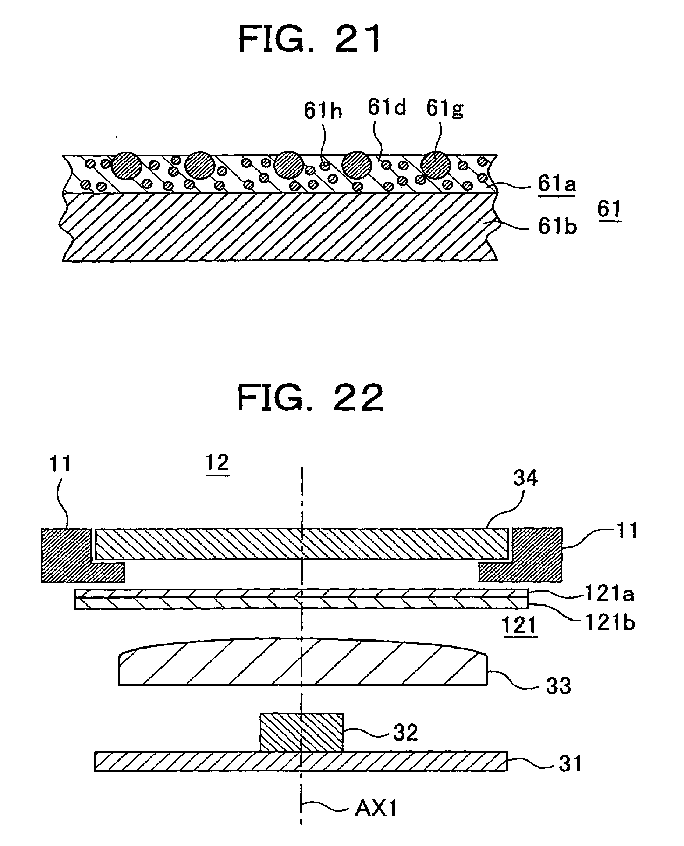

The optical diffusion plate 61 according to the twelfth embodiment shown in Fig. 21 has a diffusion layer 61a and a smooth layer 61b, and the diffusion layer 61a includes bead-like transparent balls 61g, a binder 61d, and air bubbles 61h. The optical diffusion plate differs from that shown in Fig. 18 in that the air bubbles 61h are included in the diffusion layer 61a. Because a difference in refractive index between the air bubbles 61h and the binder 61d is larger than a difference in refractive index between the bead-like transparent balls 61g and the binder 61d, greater optical diffusion occurs when the air bubbles 61h are included in the diffusion layer 61a than when no air bubbles 61h are included. In order to increase diffusion by reflection of light not by optical transmittance or refraction of light, pigments may be included instead of the air bubbles. Used as the pigments is a titanium oxide, zinc oxide, lead carbonate, barium sulfide, calcium carbonate, or the like, for instance. Pigments may also be included in the bead-like transparent balls 61g. Including the pigments causes the optical transmittance of light to decrease, but makes it harder to visually recognize the light-emitting diode.

In the examples described above, the bead-like transparent balls protruding from the surface of the diffusion layer 61a make the surface of the diffusion layer 61a rough. The surface of the diffusion layer 61a may be made rough not by the bead-like transparent balls but by the binder 61d, as has been described in connection with the sixth embodiment.

### Thirteenth Embodiment

In the twelfth embodiment described above, the structure of the optical diffusion plate 61 and the orientation of the diffusion layer 61a have been described in detail, with reference to the sixth embodiment.

In a thirteenth embodiment described below, the structure of an optical diffusion plate having a structure different from that of the sixth embodiment will be described.

Fig. 22 is a cross-sectional view showing the structure of a light 12 according to the thirteenth embodiment of the present invention. The general structure of the camera-equipped cellular phone 1 of the thirteenth embodiment is as described with reference to Fig. 1, as it is in the other embodiments described above.

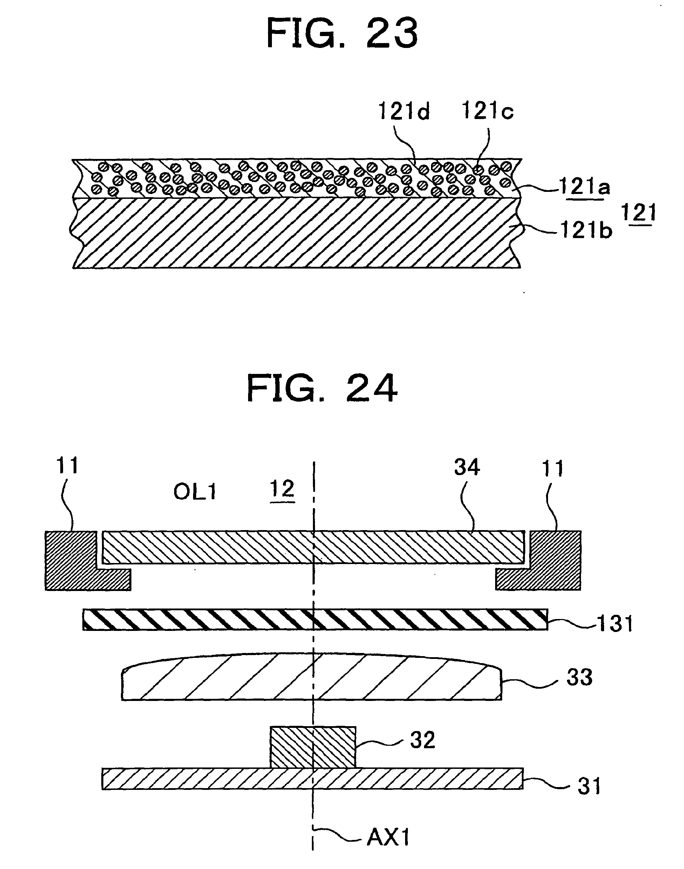

The thirteenth embodiment differs from the sixth embodiment in that the surface of an optical diffusion layer 121a of an optical diffusion plate 121 is not rough but smooth. As shown in Fig. 23, the optical diffusion plate 121 has a diffusion layer 121a and a smooth layer 121b, and the diffusion layer 121a includes air bubbles or pigments 121c and a binder 121d. The surface of the diffusion layer in the twelfth embodiment is rough, but the diffusion layer 121a of the thirteenth embodiment contains the air bubbles or pigments 121c, and the surface of the diffusion layer is smooth. The other components are the same as those of the sixth embodiment. The diffusion layer 121a may contain hollow bead-like transparent balls instead of air bubbles or pigments.

As will be clear, what is required is that the diffusion layer 121a containing air bubbles or pigments 121c make it hard to visually recognize the light-emitting diode and ensure a certain level of optical transmittance, while the surface of the diffusion layer 121a may be not be rough, and smooth.

### Fourteenth Embodiment

The optical diffusion plate of the thirteenth embodiment described above has a structure which differs from that of the sixth embodiment.

An optical diffusion plate of a fourteenth embodiment described below has a structure that differs from that of the thirteenth embodiment.

Fig. 24 is a cross-sectional view showing the structure of a light 12 according to the fourteenth embodiment of the present invention. The general structure of a camera-equipped cellular phone 1 of the fourteenth embodiment is as described with reference to Fig. 1, as it is in the other embodiments described above.

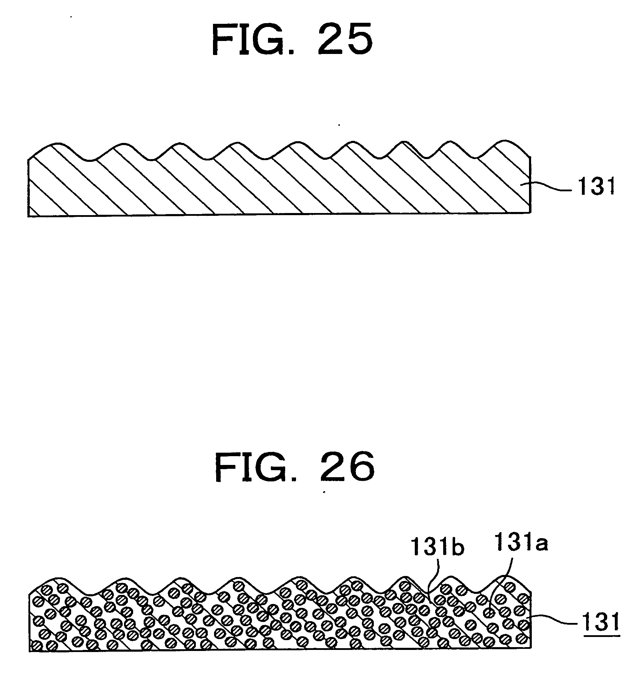

The fourteenth embodiment differs from the thirteenth embodiment in that an optical diffusion plate 131 includes just a base layer. If optical diffusion characteristics can be attained by making the surface of the optical diffusion plate 131 rough as shown in Fig. 25, the optical diffusion plate need not have two layers, i.e. , a diffusion layer and a smooth layer, as in the thirteenth embodiment. Also, the base layer 131b may contain air bubbles or pigments 131a, as shown in Fig. 26, in order to make it hard to visually recognize the light-emitting diode 32. The optical diffusion plate 131 may contain hollow bead-like transparent balls, instead of the air bubbles or pigments. If it is ensured that the optical diffusion plate 131 containing air bubbles, pigments, or hollow bead-like transparent balls as shown in Fig. 26 has a sufficient optical diffusion characteristics, the optical diffusion plate 131 may have a smooth surface.

As has been described, if it is ensured that the optical diffusion plate 131 having a rough surface has optical diffusion characteristics or the optical diffusion plate 131 containing air bubbles or pigments 131a make it hard to visually recognize the light-emitting diode and ensure a certain level of optical transmittance, there is no need to form a two-layer.optical diffusion plate 131.

In the embodiments described above, the lighting unit is used in combination with a camera-equipped cellular phone. The lighting unit according to the present invention can also be used in combination with another imaging unit such as a video camera unit or a video surveillance system.

The light distribution lens may not be required, depending on the characteristics (specification) and performance of the camera.

### Industrial Applicability

According to a cellular phone with a built-in camera in one aspect of the present invention, a light utilizing a light-emitting diode is provided. As a result, a cellular phone with a built-in camera canbe reduced in size, weight, andprofile. Because a subject can be continuously illuminated by the light, both a moving picture and a still picture of a subject can be taken by the built-in camera in low light. Light emitted from the light-emitting diode can be directed efficiently onto the subject by means of a light distribution lens for condensing light radiated forward from the light-emitting diode toward the subject.

In another aspect of the present invention, a cellular phone with a built-in camera has a light distribution lens with a support which is mounted to a light-emitting diode, so that the size, weight, and profile of the cellular phone can be reduced further. Because the positional relationship between the optical axis of a light distribution lens and the light emission point of a light-emitting diode can be determined in a high precision, design can be performed to improve light condensing efficiency by reducing the light distribution angle. This will reduce irregularities in illuminance of the subject, resulting from variations in position, and the illuminance of the subject can be improved.

In another aspect of the present invention, a cellular phone with a built-in camera has a transparent cover in which a convex lens portion having the function of a light distribution lens is formed, so that the size, weight, and profile can be reduced further.

In another aspect of the present invention, a cellular phone with a built-in camera has both a transparent cover including a convex lens and a light distribution lens equipped with a support, so that it becomes possible to reduce the size, weight, and profile of the cellular phone and also to absorb variations in light distribution among individual light-emitting diodes, positional variations in production, and other differences.

In another aspect of the present invention, a cellular phone with a built-in camera has a transparent cover formed integrally with a protection cover of a component for providing a visual effect on the user of the cellular phone with a built-in camera or integrally with a protection cover of a display device for displaying an image of a subject or an image received from a telephone of the party on the other end of communication line, so that the number of components can be reduced, and the size, weight, and profile can be reduced further.

In another aspect of the present invention, a cellular phone with a built-in camera has a film-like member of which front-to-hack optical transmittance is lower than back-to-front optical transmittance, so that it becomes possible to reduce the size, weight, and profile of the cellular phone and also to make it harder to visually recognize the light-emitting diode and the circuit board, which is favorable in regard to the appearance.

In another aspect of the present invention, a cellular phone with a built-in camera includes an optical diffusion portion for diffusing light, and the optical diffusion portion is formed on one or more sides of a component included in the lighting device. As a result, in addition to the merits that the size, weight, andprofileof the cellular phone can be reduced, and it is hard to visually recognize the light-emitting diode and circuit board, which is favorable in regard to the appearance, it is possible to selectively obtain the merit of improving optical transmittance by reducing the amount of attenuation of light emitted from the light-emitting diode or the merit of reducing variations in distribution of illumination at the subject.

In another aspect of the present invention, a cellular phone with a built-in camera includes an optical diffusion plate with an optical diffusion layer facing toward a subject, so that light reflectivity at the front surface of the optical diffusion plate becomes greater than light reflectivity at the rear surface. Moreover, light transmitted from the inside to the outside is diffused again by the optical diffusion plate. As a result, in addition to the merit that the size, weight, and profile of the cellular phone can be reduced, there are other merits that the amount of attenuation of illuminating light emitted from the light-emitting diode can be reduced, to improve the optical transmittance, and it is hard to visually recognize the light-emitting diode and circuit board, which is favorable in regard to the appearance.

In another aspect of the present invention, a cellular phone with a built-in camera has an optical diffusion plate with an optical diffusion layer directed toward the side of a light-emitting diode, in front of the light-emitting diode. As a result, in addition to the merit that the size, weight, and profile of the cellular phone can be reduced, there are merits that variations in distribution of illumination at the subject can be reduced, and it is hard to visually recognize the light-emitting diode and the circuit board, which is favorable in regard to the appearance.

In another aspect of the present invention, a cellular phone with a built-in camera has an optical diffusion plate with an optical diffusion layer provided both on the side of a subject and the side of a light-emitting diode, in front of the light-emitting diode. As a result, in addition to the merits that the size, weight, and profile of the cellular phone can be reduced, and variations in distribution of illumination at the subject can be reduced, there is an additional merit that, because the diffusion layers diffuse both entering and reflecting extraneous light, so that while the light-emitting diode is not lighted, it is hard to visually recognize the light-emitting diode, the circuit board, and other internal components from the outside, which is favorable in regard to the appearance.

In another aspect of the present invention, a cellular phone with a built-in camera has an optical diffusion plate of which diffusion layer has a rough surface. As a result, in addition to the merit that the size, weight, and profile of the cellular phone can be reduced, there is another merit that it is hard to visually recognize the light-emitting diode and the circuit board, which is favorable in regard to the appearance.

In another aspect of the present invention, a cellular phone with a built-in camera has an optical diffusion plate formed so that the optical diffusion angle in the peripheral region becomes smaller than that near the optical axis of the light-emitting diode. As a result, in addition to the merits that the size, weight, and profile of the cellular phone can be reduced, the amount of attenuation of illuminating light emitted from the light-emitting diode can be reduced, to improve the optical transmittance, variations in distribution of illumination at the subject can be reduced, and it is hard to visually recognize the light-emitting diode and circuit board, which is favorable in regard to the appearance, there is another merit that the amount of light diffusion in the peripheral part of the optical diffusion plate can be reduced to reduce the amount of light diffusion beyond the view angle and to increase the amount of light within the view angle, so that the illuminance of the subject can be increased.

In another aspect of the present invention, a cellular phone with a built-in camera has a lighting device in which a light-emitting diode is mounted directly on a printed circuit board, so that the size, weight, and profile of the cellular phone can be reduced.

In another aspect of the present invention, a cellular phone with a built-in camera has a lighting unit in which a reflection portion having a highly-reflective smooth surface is disposed at least around the light-emitting diode on a surface of a printed circuit board where a light-emitting diode is mounted, so that the amount of attenuation of illuminating light emitted from the light-emitting diode can be reduced. Light reflecting to the side of the light-emitting diode can be reflected back to the side of the subject at the surface of a light distribution lens, transparent cover, and the like, so that optical transmittance of the light distribution lens, transparent cover, and the like can be improved. Because the amount of light directed to the subject can be increased, the illuminance of the subject can be improved.

In another aspect of the present invention, a cellular phone with a built-in camera has a lighting unit in which a highly reflective structure is provided as a reflection portion at least around a light-emittingdiode, on a surface of the printed circuit board where the light-emitting diode is mounted. The amount of attenuation of illuminating light emitted from the light-emitting diode can be suppressed to a greater extent than when a reflection portion is provided on the printed circuit board. Light reflected from the surface of a light distribution lens, transparent cover, and the like, toward the light-emitting diode side, can be reflected back to the subj ect side in a shorter optical path than when a reflection portion is provided on the printed circuit board. Accordingly, optical transmittance of the light distribution lens, transparent cover, and the like can be improved. Therefore, the amount of light directed to the subject increases, improving the illuminance of the subject still further.

In another aspect of the present invention, a cellular phone with a built-in camera has a reflection portion of which surface on the side of the subject has concave-convex-shaped structures for diffusing light, so that variations in distribution of illumination at the subject are reduced, making it hard to visually recognize the light-emitting diode and circuit board. Because the light distribution characteristics of the lighting unit are improved in respect to the appearance and because the optical diffusion plate can be made thin or becomes unnecessary, the size, weight, and profile of the cellular phone can be reduced further.

In another aspect of the present invention, a cellular phone with a built-in camera has a light amount detection device for detecting the amount of ambient light, in a stage preceding a switch. When the light amount detection device detects and outputs that the light amount is insufficient, switching occurs accordingly to turn on the light automatically. Therefore, the user of the cellular phone with a built-in camera can send an image without worrying about the amount of ambient light.

In another aspect of the present invention, a cellular phone with a built-in camera uses the camera as a light amount detection device, and the amount of light is detected by the level of light reception signal of the camera. If the amount of light is insufficient, the light is automatically turned on. Therefore, the need for providing a separate light detection device is eliminated, so that the size, weight, and profile of the cellular phone can be reduced further.

In another aspect of the present invention, a cellular phone with a built-in camera uses an external light provided as a separate unit which can be detached from the cellular phone with a built-in camera. As a result, in addition to the merit that it is possible to light the subject continuously while a moving picture is being taken by the camera, and both a still picture and a moving picture of a subject can be taken by the camera in low light, there is anothermerit that the size, weight, and profile of the cellular phone can be reduced further.

In another aspect of the present invention, a lighting unit for use with a camera has the same configuration as the lighting device in the cellular phone with a built-in camera described above, and also has a plug which can be electrically and mechanically connected to a jack of the lighting device. Because the lighting unit (external light) is provided as a separate unit detachable from the cellular phone with a built-in camera and need not be included in the camera, the size, weight, and profile of the camera can be reduced further. This facilitates maintenance and replacement of the lighting unit.

## Claims

1. A cellular phone equipped with a camera which can take a moving picture of a subject, the cellular phone with a built-in camera comprising
a lighting device for lighting a subject by means of a light-emitting diode,
a switching device for turning on said lighting device,
a light distribution lens for condensing light radiated from said lighting device, toward the subject, and
a transparent cover for protecting said light distribution lens, the transparent cover being disposed on a subject side, which is a front side, of said lighting device.

2. The cellular phone with a built-in camera according to claim 1, wherein said light distribution lens comprises a supporting member which is mounted to said lighting device and supports said light distribution lens.

3. The cellular phone with a built-in camera according to claim 1, wherein
said transparent cover has a convex lens portion formed to provide a condensing function of said light distribution lens.

4. The cellular phone with a built-in camera according to claim 2, wherein
said transparent cover has a convex lens portion having a condensing function, and
said light distribution lens is also provided.

5. The cellular phone with a built-in camera according to any one of claims 1 to 4, wherein
said transparent cover is formed as an integral part of a protection cover of a component for producing a visual effect on the user of said cellular phone with a built-in camera.

6. The cellular phone with a built-in camera according to claim 5, wherein
said transparent cover is formed as an integral part of a protection cover of a display device for displaying an image of said subject or an image received from a telephone of a party on the other end of the communication line.

7. The cellular phone with a built-in camera according to any one of claims 1 to 6, wherein
said lighting device is provided with a film-like member of which front-to-back optical transmittance is lower than back-to-front optical transmittance, on a subject side, which is a front side, of said light-emitting diode.

8. The cellular phone with a built-in camera according to any one of claims 1 to 6, wherein
said lighting device is provided with a component having a side orthogonal to light emitted from the light-emitting diode and allowing light emitted from the light emitting diode to pass through, and having an optical diffusion portion disposed on at least one said orthogonal side for diffusing light.

9. The cellular phone with a built-in camera according to claim 8, wherein
said lighting device is provided with an optical diffusion plate with an optical diffusion layer disposed on the subject side, in front of said light-emitting diode.

10. The cellular phone with a built-in camera according to claim 8, wherein
said lighting device is provided with an optical diffusion plate with an optical diffusion layer disposed on the side of the light-emitting diode, in front of said light-emitting diode.

11. The cellular phone with a built-in camera according to claim 10, wherein
said lighting device has an optical diffusion layer on the side of said light-emitting diode of said optical diffusion plate and on the side of the subject of said optical diffusion plate.

12. The cellular phone with a built-in camera according to any one of claims 9 to 11, wherein
said optical diffusion plate is formed in such a manner that an angle of light diffusion in a peripheral region becomes smaller than around an optical axis of a light-emitting diode.

13. The cellular phone with a built-in camera according to any one of claims 8 to 12, wherein
said optical diffusion layer of said optical diffusion plate has a rough surface.

14. The cellular phone with a built-in camera according to any one of claims 1 to 13, wherein
said lighting device has said light-emitting diode mounted directly on a printed circuit board.

15. The cellular phone with a built-in camera according to claim 14, wherein
said lighting device comprises a reflection portion having a highly reflective surface, at least around the light-emitting diode on a surface of a printed circuit board where said light-emitting diode is mounted.

16. The cellular phone with a built-in camera according to claim 15, wherein
said reflection portion is formed on said printed circuit board by printing.

17. The cellular phone with a built-in camera according to claim 15, wherein
said reflection portion is formed by fixing a film-like member having a highly reflective surface to saidprinted circuit board.

18. The cellular phone with a built-in camera according to claim 15, wherein
said reflection portion is formed by fixing a structure which is shaped to enclose at least a part of a side wall of said light-emitting diode and has a highly reflective surface on the side of the subject, on said printed circuit board.

19. The cellular phone with a built-in camera according to claim 18, wherein
said structure of the reflection portion is formed with a resin of a highly reflective color such as white, yellow, silver or gold.

20. The cellular phone with a built-in camera according to claim 18, wherein
a surface of at least the subject side of said structure of the reflection portion is formed by coating in white, yellow, silver or gold, which is a highly reflective color.

21. The cellular phone with a built-in camera according to claim 18, wherein
said structure of the reflection portion has a surface formed of a metal film formed by evaporation or coating on at least on the side of the subject.

22. The cellular phone with a built-in camera according to any one of claims 15 to 21,
wherein a surface of said reflection portion on the side of the subject has concave-convex-shaped structures for diffusing light.

23. The cellular phone with a built-in camera according to any one of claims 1 to 22, further comprising
a light amount detection device which can detect that the amount of ambient light is insufficient; wherein
said switching device is switched, depending on the output of said light amount detection device.

24. The cellular phone with a built-in camera according to claim 23, wherein
said light amount detection device is said camera and detects the amount of light in accordance with a level of a reception signal of said camera.

25. The cellular phone with a built-in camera according to any one of claims 1 to 24, wherein
said lighting device is provided with a plug which allows an electrical and mechanical connection to said cellular phone with a built-in camera, and
the main unit of said cellular phone with a built-in camera has a jack to which said plug can be detachably connected.

26. A lighting system for usewith a camera, having configuration of the lighting device in the cellular phone with a built-in camera according to any one of claims 1 to 24, and a plug which allows an electrical and mechanical connection with the jack of the lighting device in the cellular phone with a built-in camera according to claim 25.
